**Europäisches Patentamt**

**European Patent Office**

**Office européen des brevets**

(19)

(11) Veröffentlichungsnummer: **0 289 519 B1**

(12) **EUROPÄISCHE PATENTSCHRIFT**

(45) Veröffentlichungstag der Patentschrift: **05.09.90**

(21) Anmeldenummer: **87901392.8**

(22) Anmeldetag: **12.03.87**

(86) Internationale Anmeldenummer:
**PCT/DE87/00111**

(87) Internationale Veröffentlichungsnummer:
**WO 87/05723 24.09.87 Gazette 87/21**

(51) Int. Cl.⁵: **G 06 F 3/03**, A 63 F 3/02,
G 06 F 15/44

(54) **VERFAHREN UND VORRICHTUNG ZUM FESTSTELLEN DER IDENTITÄT UND STELLUNG VON GEGENSTÄNDEN.**

(30) Priorität: **12.03.86 DE 3608148**

(43) Veröffentlichungstag der Anmeldung:
**09.11.88 Patentblatt 88/45**

(45) Bekanntmachung des Hinweises auf die
Patenterteilung:
**05.09.90 Patentblatt 90/36**

(84) Benannte Vertragsstaaten:
**AT BE CH DE FR GB IT LI LU NL SE**

(56) Entgegenhaltungen:
**EP-A-0 023 271     GB-A-2 078 533
DE-A-2 932 167     GB-A-2 103 943
DE-A-3 309 817     GB-A-2 161 629
FR-A-2 449 388     US-A-3 843 132
GB-A- 393 190      US-A-4 339 798
GB-A-1 488 654     US-A-4 345 442
GB-A-2 051 589**

**EDN Magazine, Band 26, Nr. 4, Februar
1981, (Boston, Massachusetts, US), E.D. Cooper:
"Electronic chess piece tells its place", siehe den
ganzen Artikel**

(73) Patentinhaber: **Dr. Schwab Gesellschaft für
Technologieberatung mbH
Lindwurmstrasse 97
D-8000 München 2 (DE)**

(72) Erfinder: **SCHWAB, Günther
Lindwurmstrasse 97
D-8000 München 2 (DE)**

(74) Vertreter: **Ninnemann, Detlef, Dipl.-Ing.
Patentanwälte Maikowski & Ninnemann
Xantener Strasse 10
D-1000 Berlin 15 (DE)**

Courier Press, Leamington Spa, England.

**Beschreibung**

Die Erfindung betrifft ein Verfahren und eine Vorrichtung der im Oberbegriff des Anspruchs 1 angegebenen Art sowie eine Anordnung zur Durchführung des Verfahrens.

Aus der DE—2 932 167 sowie der GB—A—2 051 589 ist es in Verbindung mit Schachcomputern bekannt, die Stellung der Schachfiguren auf den einzelnen Feldern eines Schachbrettes mit Hilfe von an der Unterseite der Schachfiguren angebrachten Permanentmagneten und an der Unterseite des Schachbrettes angeordneten, auf die Magnetfelder der Permanentmagneten ansprechende Reed-Relais bzw. ähnliche, auf Magnetfelder reagierende Kontaktschalter, anzuordnen. Befindet sich eine Schachfigur auf einem der Felder des Schachbrettes, so bewirkt das von dem Permanentmagneten der Schachfigur ausgehende Magnetfeld, daß der betreffende Kontaktschalter und damit ein Stromkreis geschlossen wird, so daß in Verbindung mit einer entsprechenden Überwachungseinrichtung bestimmt werden kann, auf welchen Feldern des Schachbrettes Schachfiguren stehen. In Verbindung mit einem Mikroprozessor und Speicher läßt sich somit die Bewegung der einzelnen Schachfiguren nachvollziehen und es können Gegenzüge mittels des Prozessors errechnet und beispielsweise mittels in den einzelnen Feldern des Schachbrettes angeordneter Leuchtdioden oder mittels Flüssigkristallanzeigen unter Angabe der Reihe und Spalte des betreffenden Feldes des Schachbrettes Gegenzüge angezeigt werden.

Die bekannten Vorrichtungen sind jedoch nicht in der Lage, neben der Angabe der Stellung einzelner Schachfiguren, d.h. der Angabe, ob ein Spielfeld besetzt ist oder nicht, auch die Identität der das betreffende Schachfeld besetzenden Schachfigur anzugeben. So ist es beispielsweise bei der Lösung von Schachproblemen mittels Schachcomputer erforderlich, daß der Spieler die Figuren auf die entsprechenden Felder setzt und gleichzeitig über eine Tastatur eingibt, welche Figur das betreffende Feld besetzt. Nur in der Ausgangsstellung der Schachfiguren ist eine zusätzliche Eingabe nicht erforderlich, da diese Stellungseingabe in dem Programm gespeichert ist.

Ein Verfahren der im Oberbegriff des Anspruchs 1 genannten Art ist aus der GB—A—2 103 943 bekannt, das sich auf ein elektronisches Brettspiel, insbesondere ein elektronisches Schachbrett, bezieht, bei dem jede Spielfigur des elektronischen Brettspiels mit einer Kennungseinrichtung in Form einer elektrischen Resonanzschaltung versehen ist, die auf eine bestimmte Resonanzfrequenz eingestellt ist, sodaß sie sich von der Resonanzfrequenz der anderen Spielfiguren unterscheidet. Jedes Spielfeld des elektronischen Schachbrettes ist mit einer als Übertrager ausgebildeten Abtasteinrichtung ausgestattet, die einen Impuls abgibt, um eine Resonanzschwingung in der Resonanzschaltung einer auf dem betreffenden Spielfeld positionierten Spielfigur hervorzurufen. Die von einem Empfänger aufgenommene Resonanzfrequenz wird mit Hilfe eines Diskriminators zur Bestimmung der Identität und Stellung der betreffenden Schach-Spielfigur auf dem Spielfeld ausgewertet, indem die Anzahl der Schwingungen des empfangenen Signals gezählt und die Anzahl der Schwingungen mit einem gespeicherten Wert verglichen wird, der der betreffenden Spielfigur zugeordnet ist. Anschließend gibt die Auswerteinrichtung ein der Identität und Stellung der Spielfiguren auf dem Spielfeld entsprechendes Signal ab.

Die bekannte Vorrichtung basiert auf einer kontaktlosen Identitäts- und Stellungserfassung und setzt eine exakte Abstimmung zwischen dem Übertragersignal, der Resonanzschaltung und dem Empfangssignal voraus. Die erforderliche genaue Abstimmung bedeutet einerseits einen erheblichen Aufwand bei der Herstellung und Testierung des elektronischen Spielbrettes und andererseits eine große Empfindlichkeit gegenüber äußeren Störeinflüssen.

Aus der DE—A—3 309 817 ist ein Spiel mit einem aus einer Mehrzahl einzelner Felder zusammengesetzten Spielfeld und einer Mehrzahl von Spielelementen bekannt, bei dem die Spielelemente unterschiedliche Codierungen aufweisen, die von Sensoren in den Feldern erfaßt werden. Die Ausgänge der Sensoren sind mit einer Signalverarbeitungseinrichtung verbunden, über die eine Speicherung und Auswertung des Spielverlaufs erfolgt. Die Codierung der Spielelemente besteht bei dem bekannten Spiel aus stabförmigen Permanentmagneten vorgegebener Länge, während die Sensoren in den einzelnen Spielfeldern aus Hall-Sensoren bestehen, die über einen gemeinsamen Strompfad mit einer Konstantstromquelle verbunden sind. Als Folge der unterschiedlichen Länge der einzelnen Stabmagnete und ggf. einer unterschiedlichen Polarität kann mittels der Hall-Sensoren sowohl die Position als auch die Identität des betreffenden Spielelementes erfaßt werden.

Bei dieser bekannten Vorrichtung ist eine genaue Positionierung der einzelnen Spielelemente erforderlich, damit die Hall-Sensoren in geeigneter Weise von den Stabmagneten der Spielelemente beeinflußt werden. Zu diesem Zweck ist eine Vertiefung vorgesehen, in die die betreffenden Spielelemente eingesetzt werden müssen, damit sie eindeutig positioniert sind.

Zusätzlich sind magnetische Abschirmungen erforderlich, damit keine Beeinflussung eines benachbarten Spielelementes auftritt. Auch hier ist eine sehr genaue Justierung der Hall-Sensoren und Stabmagnete erforderlich, wobei in Folge der begrenzten Länge der einzelnen Spielelemente eine nur begrenzte Anzahl unterschiedlicher Spielelemente durch unterschiedlich lange Stabmagnete gekennzeichnet werden kann.

Aufgabe der vorliegenden Erfindung ist es, ein Verfahren und eine Vorrichtung zum Feststellen der Identität und Stellung von Gegenständen der eingangs genannten Art zu schaffen, die mit geringem Schaltungs- und Justierungsaufwand eine sichere Angabe der Identität und Stellung des Gegenstandes bei geringer Empfindlichkeit gegenüber äußeren Störeinflüssen ermöglicht.

Diese Aufgabe wird dadurch gelöst, daß die Felder in mindestens zwei Teilfelder unterteilt sind und ein erster und zweiter Teil der Teilfelder eines Feldes von jeweils einer eine Impedanz aufweisenden Kennungseinrichtung überbrückt wird, und daß eine Messung der Impedanz zwischen dem ersten und zweiten Teil der Teilfelder vorgenommen wird, indem an den ersten Teil der Teilfelder ein elektrisches Eingangssignal gelegt wird und die Auswerteinrichtung das elektrische Ausgangssignal an dem zweiten Teil der Teilfelder erfaßt.

Die erfindungsgemäße Lösung ermöglicht ein sicheres Erkennen sowohl der Identität als auch der Stellung eines Gegenstandes auf einer Vielzahl von Feldern eines Bereichs mit geringem Schaltungs- und Justierungsaufwand bei geringer Empfindlichkeit gegenüber äußeren Störeinflüssen.

Eine Vorrichtung zum Festellen der Identität und Stellung von Gegenständen ist dadurch gekennzeichnet, daß jedes der Felder des Bereiches in mindestens zwei Teilfelder unterteilt ist, daß die die Felder des Bereiches berührende Fläche der Gegenstände in jeder Stellung der Gegenstände auf einem Feld zwei Teilfelder wenigstens teilweise überdeckt, daß jeder der Gegenstände eine vorbestimmte Widerstandsanordnung aufweist, die mit mindestens zwei Kontaktpunkten verbunden ist, die auf der das betreffende Feld berührenden Fläche jeweils ein Teilfeld kontaktieren, und daß das eine Teilfeld mit einem, ein vorbestimmtes elektrisches Signal abgebenden Signalgeber und das andere Teilfeld mit einem Signalempfänger verbunden ist, der bei Belegung eines Feldes mit einem Gegenstand infolge der Widerstandsanordnung des betreffenden Gegenstandes ein verändertes Signal erfaßt und an die Auswerteinrichtung abgibt, die die Belegung des betreffenden Feldes des Bereichs anzeigt und durch einen Vergleich des veränderten Signals mit gespeicherten Werten veränderter Signale für die einzelnen Gegenstände ein die Identität und Stellung des betreffenden Gegenstandes anzeigendes Signal abgibt.

Diese Vorrichtung ist mit geringem Bauelement- und Schaltungsaufwand sowie geringem Aufwand bezüglich der Justierung der Kennungs- und Auswerteinrichtungen herstellbar und zeichnet sich aufgrund der einfachen Widerstandsmessung durch ein Höchstmaß an Sicherheit bei der Erfassung der Identität und Stellung der Gegenstände aus.

Eine Anordnung zum Überwachen, Anzeigen, Kommentieren und Dokumentieren von Schachpartien, die von der Vorrichtung zum Erfassen der Identität und Stellung von Gegenständen auf einer Vielzahl von Feldern eines Bereiches Gebrauch macht, ist dadurch gekennzeichnet, daß mindestens ein die Stellung der Schachfiguren erfassendes elektronisches Schachbrett mit einer Video-Schnittstelle verbunden ist, deren Ausgang sowohl an ein Video-Anzeigegerät als auch an eine Abtast- und Speichereinrichtung angeschlossen ist, daß die Abtast- und Speichereinrichtung mit dem Eingang einer Datenverarbeitungseinrichtung verbunden ist, daß die Video-Schnittstelle mit einer Eingabetastatur zur Eingabe von Kennungen oder Spielinformationen, die auf dem Video-Anzeigegerät angezeigt und/oder an die Datenverarbeitungseinrichtung abgegeben werden, und daß die Video-Schnittstelle mit einer von den Schachspielern bedienbaren Schachuhr verbunden ist.

Diese Lösung gestattet es, durch Verwendung elektronischer Schachbretter die Zulassigkeit einzelner Züge automatisch zu kontrollieren, so daß die Schiedsrichterfunktion erleichtert und zentralisiert wird und die Auswertung auch größerer Tuniere mit einer großen Anzahl beteiligter Schachspieler in einem Minimum an Zeit erfolgen kann.

Darüber hinaus werden die einzelnen Schachpartien automatisch protokolliert und gespeichert und ein Kommentieren der einzelnen Schachspiele in übersichtlicher Form auf Bildschirmen oder Großbildleinwänden sowie mittels Fernsehübertragung zu beliebigen Orten ermöglicht. Zusätzlich können die Tuniere automatisch dokumentiert und beispielsweise beim Weltschachverband gesammelt werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1 ein Blockschaltbild zur Feststellung der Identität und Stellung von Schachfiguren auf einem Schachbrett;

Fig. 2 und 3 eine schematische Darstellung verschiedener Stellungen dar an einem Gegenstand angebrachten Widerstandsanordnung auf einem zweigeteilten Feld;

Fig. 4 eine schematische Darstellung der Widerstandsanordnung eines Gegenstandes auf einem dreigeteilten Feld;

Fig. 5 eine schematische Darstellung eines in vier Teilfelder unterteilten Feldes für wechselnde Ansteuerung;

Fig. 6 eine schematische Darstellung eines in Teilfelder unterteilten Schachbrettes mit einem Signalgeber und Signalempfänger;

Fig. 7 eine Schaltung zur Erfassung veränderter Signale infolge von auf den Feldern des Schachbrettes gem. Fig. 6 angeordneten Schachfiguren;

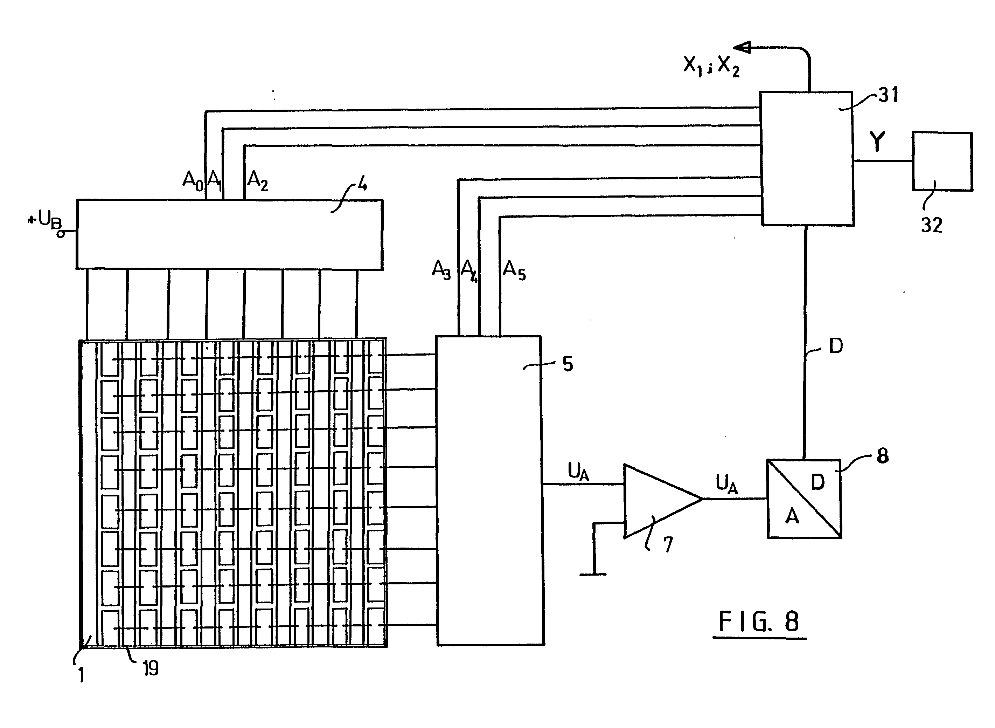

Fig. 8 ein Blockschaltbild einer Vorrichtung zum Erkennen der Identität und Stellung von Schachfiguren auf einem Schachbrett mit reihen- und spaltenweiser Abtastung der einzelnen Felder des Schachbrettes;

Fig. 9 ein Blockschaltbild einer Anordnung zum Überwachen, Anzeigen, Kommentieren und Dokumentieren von Schachpartien;

Fig. 10 ein Blockschaltbild einer Video-Schnittstelle;

Fig. 11 ein Blockschaltbild einer Anordnung gem. Fig. 9 mit mehreren an eine Abtast- und Speichereinrichtung angeschlossenen Video-Schnittstellen und

Fig. 12 ein Blockschaltbild mehrerer über einen Netzwerk-Controller an eine Datenverarbeitungseinrichtung angeschlossenen Video-Schnittstellen.

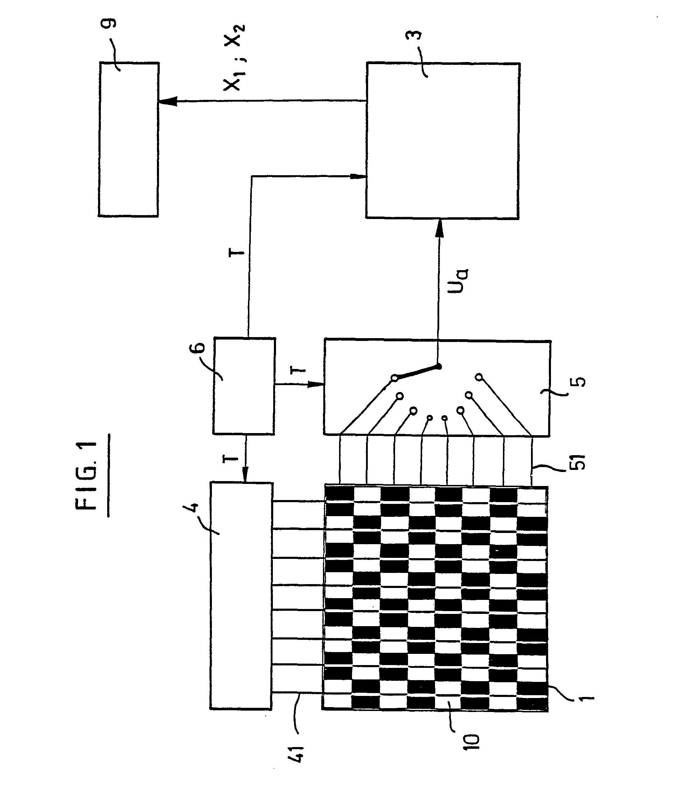

Das in Fig. 1 dargestellte Blockschaltbild zeigt ein Schachbrett 1 mit 64 einzelnen Feldern 10, die in jeweils acht Reihen und acht Spalten in bekannter Weise angeordnet sind. Die einzelnen Spalten des Schachbrettes 1 sind mit den Ausgängen eines Signalgebers 4 über Leitungen 41 verbunden, während die acht Reihen des Schachbrettes 1 mit einem Signalempfänger 5 über Leitungen 51 verbunden sind. Der Signalempfänger 5 ist mit dem Eingang einer Auswerteinrichtung 3 verbunden, deren Ausgang wiederum mit einer Anzeigeeinrichtung 9, beispielsweise einer Leuchtdiodenanzeige oder einer Flüssigkristallanzeige oder einer beliebigen Bildschirmanzeige, verbunden ist. Ein Taktgeber 6 synchronisiert über Taktleitungen T die Arbeitsweise sowohl des Signalgebers 4 als auch des Signalempfängers 5 und der Auswerteinrichtung 3.

Wie der schematischen Darstellung gem. Fig. 1 zu entnehmen ist, sind die einzelnen Felder 10 des Schachbrettes 1 in zwei im wesentlichen gleich große Hälften unterteilt und durch eine normale Isolierschicht elektrisch voneinander getrennt. Mittels des Signalgebers 4 wird über die Ausgangsleitungen 41 ein Signal an die jeweils eine Hälfte der einzelnen Felder 10 angelegt, während die anderen Hälften der Felder 10 über jeweils eine Leitung 51 mit dem Signalempfänger 5 verbunden sind.

Durch Herstellen einer leitenden Verbindung von der einen Hälfte eines jeden Feldes 10 zur anderen Hälfte mittels einer an der Unterseite der Schachfiguren angeordneten Kennungseinrichtung werden die von dem Signalgeber 4 an die jeweils eine Hälfte der Felder 10 abgegebenen Signale auf die andere Hälfte der einzelnen Felder 10 gegeben, so daß der Signalempfänger 5 über die Leitungen 51 sowohl die Belegung eines bestimmten Feldes der 64 Felder des Schachbrettes 1 als auch infolge der Kennungseinrichtung die jeweilige Identität der betreffenden Schachfigur, d.h. ob es sich um einen weißen oder schwarzen König, eine weiße oder schwarze Dame, weißen oder schwarzen Turm, Läufer, Springer oder Bauern handelt, erfassen, und das entsprechende Signal Ua an die Auswerteinrichtung 3 weiterleiten.

Bei den von dem Signalgeber 4 abgegebenen elektrischen Signalen kann es sich sowohl um Gleichspannungs- als auch um Wechselspannungssignale beliebiger Frequenz handeln. Mittels einer komplexen Widerstandsanordnung an der Unterseite der Schachfiguren wird in Abhängigkeit von der Größe des komplexen Widerstandes ein Gleich- oder Wechselstrom unterschiedlicher Größe von der einen, mit einem Ausgang des Signalgebers 4 verbundenen Hälfte jedes Feldes zur anderen Hälfte des betreffenden Feldes bei Belegung mit einer Schachfigur geleitet, so daß aus der Erfassung des jeweiligen Stromflusses über den Signalempfänger 5 die Auswerteinrichtung 3 bestimmen kann, welcher Art die betreffende Schachfigur ist.

Die Auswerteinrichtung 3 vergleicht die vom Signalempfänger 5 für jedes der belegten Felder abgegebenen Ströme mit entsprechenden Stromwerten, die für die einzelnen möglichen Schachfiguren gespeichert sind. Da es bei der Schachfigurenerkennung grundsätzlich 12 verschiedene Figuren gibt, müssen in der Auswerteinrichtung 3 die Werte für diese 12 verschiedenen Möglichkeiten vorgesehen sein, so daß durch einen Vergleich der gespeicherten Werte mit den vom Signalempfänger 5 abgegebenen Signalen die jeweilige Identität der Schachfigur festgestellt werden kann. Da darüber hinaus die Abfrage der einzelnen Felder mittels des Taktgebers 6 synchronisiert wird, kann gleichzeitig festgestellt werden, ob das gerade abgefragte Feld belegt ist oder nicht, da bei nicht belegtem Feld keinerlei Verbindung zwischen den beiden Hälften der einzelnen Felder 10 hergestellt ist, so daß vom Signalempfänger 5 auch kein Strom erfaßt wird.

Die Art der Abtastung der einzelnen Felder 10 des Schachbrettes 1 kann auf verschiedenartige Weise erfolgen. Die einfachste Möglichkeit besteht darin, die eine Hälfte jedes Feldes mit dem Signalempfänger 5 zu verbinden. Diese hätte jeweils 64 Leitungen 41 sowie 64 Leitungen 51 zur Folge, was mit einem erheblichen schaltungstechnischen Aufwand verbunden ist.

Eine einfachere Möglichkeit besteht darin, die eine Hälfte sämtlicher Felder jeweils einer Spalte mit einem von somit acht Ausgängen des Signalgebers 4 zu verbinden, so daß der Signalgeber 4 über acht Ausgangsleitungen ein Signal an die jeweils eine Hälfte der acht Felder einer Spalte des Schachbrettfeldes 1 legt. Durch zyklisches Umschalten kann dann der Signalempfänger 5 die jeweils andere Hälfte der einzelnen Felder 10 abfragen und bei Belegung eines Feldes ein von der auf dem Feld befindlichen Schachfigur abhängendes Signal an die Auswerteinrichtung 3 weiterleiten.

Ein Minimum an Leitungsverbindungen der einzelnen Felder 10 des Schachbrettes 1 mit dem Signalgeber 4 einerseits und dem Signalgeber 5 andererseits wird dadurch erzielt, daß analog zur vorstehend beschriebenen Anordnung die einen Hälften jedes Feldes 10 einer Spalte untereinander und mit einem Ausgang des Signalgebers 4 verbunden sind, während die jeweils anderen Hälften jedes Feldes 10 einer Reihe untereinander und mit dem Signalempfänger 5 verbunden sind, so daß acht Reihen-Ausgangsleitungen 51 zum Signalempfänger 5 führen. Diese Anordnung setzt voraus, daß der Signalgeber 4 nur an jeweils eine Spalte des Schachbrettes 1 ein Signal abgibt und dieses Signal zyklisch auf die anderen Spalten weiterleitet und daß der Signalempfänger 5 ebenfalls zyklisch die einzelnen Reihen der Schachbrettmatrix abfragt. Da mittels des Taktgebers 6 der Signalgeber 4, der Signalempfänger 5 und die Auswerteinrichtung 3 miteinander synchronisiert sind, kann durch zyklisches Umschalten des Signalgebers 4 und des Signalempfängers 5 jedes einzelne Feld 10 des Schachbrettes abgefragt werden. Die bei Belegung eines Feldes des Schachbrettes 1 mit einer Schachfigur erhaltenen Stromwerte werden in der Auswerteinrichtung mittels gespeicherter Werte verglichen und ein entsprechendes Signal $X_1$, $X_2$

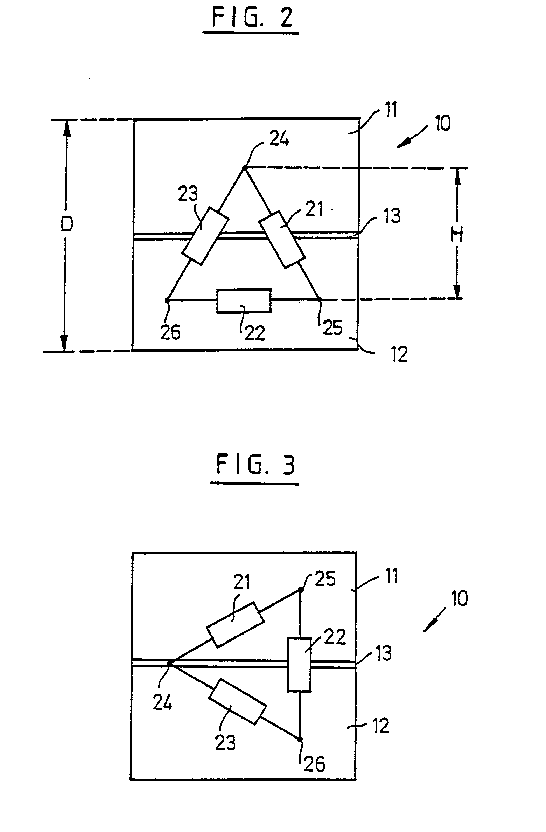

erzeugt, das sowohl die Stellung der betreffenden Schachfigur innerhalb der Schachbrettmatrix als auch die Art der betrefffenden Schachfigur angibt. Anhand der Fig. 2 bis 4 soll die Feststellung der Identität eines Gegenstandes auf einem vorgegebenen Feld eines Bereiches näher erläutert werden.

Wie der Darstellung gem. Fig. 2 zu entnehmen ist, ist jedes Feld 10 in zwei etwa gleich große Teilfelder 11, 12 unterteilt, die durch eine Isolierschicht 13 voneinander getrennt sind. Die beiden Teilfelder 11, 12 sind elektrisch leitend und entsprechend der vorstehenden Beschreibung mit dem Signalgeber bzw. dem Signalempfänger verbunden. Ein zu identifizierender Gegenstand weist an seiner Unterseite, d.h. an der das Feld berührenden Fläche, drei Kontaktpunkte 24, 25, 26 auf, die mit jeweils zwei Widerständen 21, 22, bzw. 22, 23 bzw. 21, 23 verbunden sind, so daß sich eine Dreiecks-Widerstandsanordnung ergibt. Die Kontaktpunkte 24, 25, 26 können beispielsweise aus einem elektrisch leitfähigen Gummi oder Kunststoff bestehen, so daß eine elektrische Verbindung der Kontaktpunkte 24, 25, 26 mit den Teilfeldern 11, 12 hergestellt wird.

Die Kontaktpunkte 24, 25, 26 sind vorzugsweise Spitzen eines gleichseitigen Dreiecks, dessen Höhe H so bemessen ist, daß sie geringfügig größer als die halbe Seitenlänge D des quadratischen Feldes 10 ist. Dadurch wird sichergestellt, daß der Gegenstand, beispielsweise eine Schachfigur auf einem Schachfeld frei positionierbar ist, d.h. nicht in der Mitte des Feldes angeordnet werden muß, um eine elektrische Verbindung zwischen beiden Teilfeldern 11, 12 über die Widerstandsanordnung 21, 22, 23 herzustellen. Infolge der Dreieckanordnung ist darüber hinaus sichergestellt, daß in jeder Stellung des Gegenstandes auf dem Feld 10 mindestens zwei Punkte in verschiedenen Teilfeldern 11, 12 angeordnet sind, wie dies Fig. 3 bei einer Stellung veranschaulicht, in der der Gegenstand so auf dem Feld 10 angeordnet ist, daß einer der Kontaktpunkte, hier der Kontaktpunkt 24, direkt auf der Isolierschicht 13 angeordnet ist.

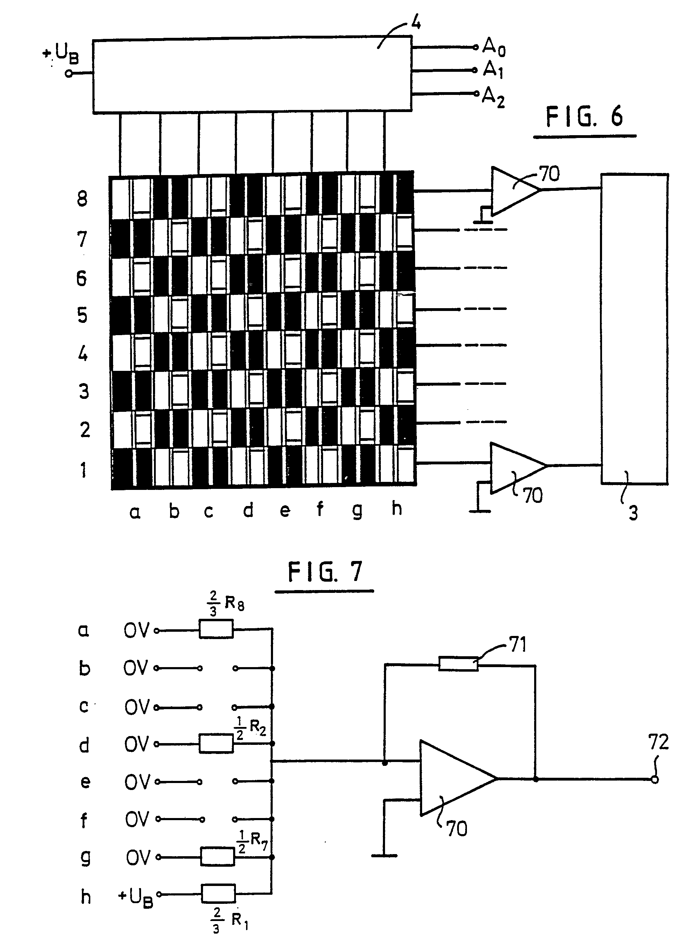

Fig. 3 veranschaulicht auch eine weitere Bedingung zur sicheren Erfassung der Identität des betreffenden Gegenstandes auf dem Feld 10, die darin besteht, daß die Durchmesser der Kontaktpunkte kleiner sein müssen, als die Dicke der Isolierschicht 13, da anderenfalls im Falle einer Stellung des Gegenstandes auf dem Feld 10 gem. Fig. 3 ein Kurzschluß zwischen beiden Teilfeldern 11, 12 hervorgeurfen würde, was eine Messung des Widerstandes der Widerstandsanordnung unmöglich machen würde. Eine Alternative zu dieser Bedingung ist in der Anordnung gem. Fig. 5 dargestellt.

Aus den Darstellungen gem. den Fig. 2 und 3 wird deutlich, daß bei einer Dreieckschaltung der Widerstandsanordnung 21, 22, 23 je nach Stellung des Gegenstandes auf dem Feld 10 die Parallelschaltung zweier gleich großer, komplexer Widerstände 21, 23 (Fig. 2) oder die Parallelschaltung eines komplexen Widerstandes 22 mit der Reihenschaltung zweier gleich großer komplexer Widerstände 21, 23 (Fig. 3) gemessen wird. Beträgt der komplexe Widerstand Z und wird vorausgesetzt, daß sämtliche komplexen Widerstände 21, 22, 23 den gleichen komplexen Widerstandswert Z aufweisen, so geht bei Belegung eines Feldes 10 mit einem Gegenstand entweder der komplexe Gesamtwiderstand Z/2 oder 2/3 Z in die Messung ein. Je nach Anzahl unterschiedlicher Gegenstände, die auf den Feldern 10 positioniert werden können, ergeben sich somit der doppelten Anzahl verschiedener Gegenstände entsprechende Widerstandswerte. Bei der Festlegung der komplexen Widerstandswerte für die einzelnen Gegenstände ist zu beachten, daß die Unterschiede groß genug sind, um auch bei ungenügender Kontaktgabe durch die Kontaktpunkte 24, 25, 26 und unter Berücksichtigung von Signalschwankungen ein ausreichender Sicherheitsabstand zu dem jeweils benachbarten Widerstandswert eingehalten wird. Andererseits ist ein zu großer Meßwertumfang bzw. eine zu große Dynamik beim Messen problematisch hinsichtlich der Verwendung von z.B. Multiplexern als Meßwertempfänger. Auf Grund der von der Stellung des Gegenstandes auf dem Feld 10 abhängigen Erfassung eines Widerstandswertes von Z/2 bzw. 2/3 Z werden die Widerstandswerte den einzelnen Gegenständen so zugeordnet, daß sich zur Erzielung eines kleinen Meßwertumfanges die möglichen Widerstands-Meßwerte nach folgendem Schema verteilen:

$$Z_{0/2}, Z_{1/2}, 2/3\ Z_0, 2/3\ Z_1, Z_{2/2} \ldots Z_{n-1/2}, Z_{n-2}, 2/3\ Z_{n-1}, 2/3\ Z_n.$$

Als komplexer Widerstand kommt jede beliebige Kombination eines Ohm'schen Widerstandes, einer Kapazität oder eine Induktivität in Verbindung mit einem vom Signalgeber abgegebenen Wechselspannungssignal in Frage. Vorzugsweise wird jedoch vom Signalgeber eine Gleichspannung abgegeben und es werden Ohm'sche Widerstände als Kennungseinrichtungen für die einzelnen Gegenstände verwendet. Dies soll nachstehend anhand der Feststellung der Identität und Stellung von Schachfiguren auf einem Schachbrett näher erläutert werden.

Den sechs unterschiedlichen Schachfiguren (König, Dame, Turm, Springer, Läufer, Bauer) jeder Spielfarbe (weiß, schwarz) wird ein bestimmter Ohm'scher Widerstandswert $R_0$, $R_1$, ... $R_{12}$ zugeordnet, so daß sich als Gesamtwiderstand für jede einzelne Figur der Wert

$$R_{0/2}; R_{1/2}; 2/3\ R_0; 2/3\ R_1; R_{2/2} \ldots R_{11/2}; R_{12/2}; 2/3\ R_{11}$$

ergibt.

Die Widerstände für die einzelnen Schachfiguren werden nun so festgelegt, daß sich gleiche Abstände zwischen den Gesamtwiderstandswerten ergeben, so daß sich ein maximaler Sicherheitsabstand bei minimaler Differenz zwischen dem größten und kleinsten Widerstandswert ergibt, so daß der Meßwertumfang minimiert wird.

EP 0 289 519 B1

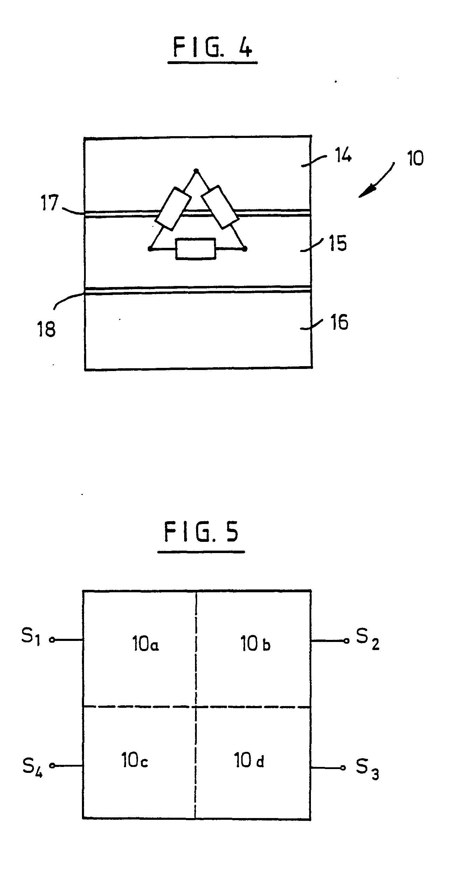

In den Fig. 4 und 5 sind weitere Ausführungsbeispiele zur Konfiguration der Felder 10 in Verbindung mit einer dreieckförmigen Widerstandsanordnung dargestellt.

Fig. 4 zeigt ein in drei gleich große Teilfelder 14, 15, 16 unterteiltes Feld, wobei die Teilfelder 14, 15, 16 durch Isolierschichten 17, 18 voneinander getrennt sind. Da in diesem Falle die Bedingung zu erfüllen ist

$$H > \frac{D}{3}$$

kann die Berührungsfläche des auf dem Feld 10 zu positionierenden Gegenstandes kleiner als im vorstehenden Ausführungsbeispiel gem. den Fig. 2 und 3 gemacht werden, ohne daß die Gefahr besteht, daß keine Messung erfolgen kann, da alle drei Kontaktpunkte 24, 25, 26 im selben Feld auf Grund der Stellung des Gegenstandes angeordnet sind. In dem Ausführungsbeispiel gem. Fig. 4 kann beispielsweise ein Signal vom Signalgeber an das Teilfeld 15 gelegt werden, während die Teilfelder 14, 16 untereinander und mit dem Signalempfänger verbunden sind. Alternativ hierzu kann an die Teilfelder 14, 16 abwechselnd ein Signal vom Signalgeber gelegt werden, während das Teilfeld 15 mit dem Signalempfänger verbunden ist. Dadurch lassen sich Fehlmessungen auf Grund eventueller Kurzschlüsse analog zur Anordnung gem. Fig. 5 vermeiden.

In Fig. 5 ist ein Ausführungsbeispiel dargestellt, bei dem das Feld 10 aus vier gleich großen Teilfeldern 10a, 10b, 10c, 10d besteht, die durch entsprechende Isolierschichten voneinander getrennt sind. Die einzelnen Teilfelder 10a bis 10d sint mit Anschlüssen S1 bis S4 verbunden, die sowohl mit dem Signalgeber als auch dem Signalempfänger verbunden sind und wechselweise an den Signalgeber bzw. Signalempfänger angeschlossen werden. Durch Umschalten ist entweder der sich aus den Teilfeldern 10a, 10b zusammensetzende Teilfeldbereich oder der sich aus den Teilfeldern 10a, 10c zusammensetzende Teilfeldbereich mit dem Signalgeber und der jeweils verbleibende Teilfeldbereich mit dem Signalempfänger verbunden, so daß für den Fall, daß die Kontaktpunkte größer als die Isolierschicht sind und somit die Gefahr eines Kurzschlusses besteht, auch bei entsprechend ungünstigen Stellungen des Gegenstandes auf dem Feld 10 eine Messung erfolgen kann, da bei einer der beiden Messungen in jedem Fall der Kurzschluß aufgehoben ist.

Das in Fig. 6 dargestellte Prinzipschaltbild zur Feststellung der Identität und Stellung von Schachfiguren auf einem Schachbrett 1 verdeutlicht die Aufteilung der einzelnen Felder in Teilfelder, die entweder mit dem Signalgeber 4 oder dem Eingang eines Operationsverstärkers 70 verbunden sind. Das matrixförmige Schachbrett ist in bekannter Weise in acht Reihen und acht Spalten unterteilt, die einer internationalen Vereinbarung entsprechend mit Ziffern (1) bis (8) für die Reihen und Buchstaben (a) bis (h) für die Spalten bezeichnet sind. Bei der Anordnung gem. Fig. 6 sind die Teilfelder der Spalten (a) bis (h) untereinander und mit jeweils einem von acht Ausgängen des Signalgebers 4 verbunden.

Die verbleibenden Teilfelder jeder Reihe (1) bis (8) des matrixförmigen Schachbrettes sind über je eine Leitung mit einem Eingang jeweils eines für jede Reihe (1) bis (8) vorgesehenen Verstärkers 70 verbunden. Der Ausgang des jeweiligen Verstärkers ist mit einem von acht Eingängen der Auswerteinrichtung 3 verbunden.

Der Signalgeber 4 weist zusätzlich drei Adresseingänge A0 bis A2 auf, durch die jeweils eine der acht mit den Spalten (a) bis (h) der Schachbrettmatrix verbundenen Leitungen aktiviert werden kann. Wird beispielsweise der Signalgeber an eine Gleichspannung + $U_B$ angeschlossen, so kann in Abhängigkeit von der Adressierung diese Spannung + $U_B$ an eine der acht Ausgangsleitungen angelegt werden. Diese kann beispielsweise in der Weise erfolgen, daß der Signalgeber aus einer kombinatorischen Logik in Verbindung mit Feldeffekt- oder bipolaren Transistoren besteht, deren Steueranschlüsse mit den Ausgängen der kombinatorischen Logik verbunden sind, während die Laststrecken an die Spannungsquelle + UB einerseits und an die Verbindungsleitungen zu den Spalten (a) bis (h) der Schachbrettmatrix andererseits angeschlossen sind.

Wie der Darstellung gem. Fig. 7 in Verbindung mit Fig. 6 zu entnehmen ist, ist der eine Eingang des Operationsverstärkers 70 mit den jeweils acht Teilfeldern einer Reihe (1) bis (8) verbunden, auf denen Schachfiguren unterschiedlicher Art positioniert sind oder nicht. In der Darstellung gem. Fig. 7 ist eine einzelne Reihe der Schachbrettmatrix herausgezeichnet und die Belegung eines Feldes durch die Anordnung eines Widerstandes wiedergegeben worden. Der Darstellung gem. Fig. 7 ist zu entnehmen, daß beispielsweise das in der Spalte (a) angeordnete Teilfeld der betreffenden Reihe mit einer Schachfigur belegt ist, der der Widerstandswert R8 zugeordnet ist. Die Teilfelder der Spalten (b), (c), (e) und (f) sind unbelegt, während die verbleibenden Teilfelder (d), (g) und (h) mit unterschiedlichen Schachfiguren belegt sind.

Da der Signalgeber 4 die Gleichspannung + $U_B$ zyklisch an die einzelnen Spalten (a) bis (h) anlegt, kann jeweils nur an einer der Spalten, in der Darstellung gem. Fig. 6 an der Spalte (h) die Spannung + $U_B$ anliegen, so daß das betreffende Feld der Spalte (h) am Eingang des Operationsverstärkers 70 anliegt. In diesem Fall kann nur ein Strom von den Teilfeldern der Spalte (h) zu den anderen Teilfeldern dieser Spalte fließen, vorausgesetzt, daß das betreffende Feld mit einer Schachfigur belegt ist. In der Darstellung gem. Fig. 6, in der der Operationsverstärker 70 mit einem Widerstand 71 mit dem Widerstandswert Ra beschaltet ist, beträgt somit die am Ausgang 72 des Operationsverstärkers 70 anliegende Spannung $U_a$:

$$U_a = -\ \frac{U_B \cdot R_a}{2/3\ R_1}$$

Analog hierzu werden von den sieben weiteren Operationsverstärkern entsprechende Ausgangsspannungen abgegeben, vorausgesetzt, die den einzelnen Reihen (1) bis (8) der Schachbrettmatrix zugeordneten Teilfelder der Spalte (h) sind mit Schachfiguren belegt. Die Auswerteinrichtung 3 erhält somit acht verschiedene Meßwerte und kann in Abhängigkeit davon, ob eine Ausgangsspannung und wie groß diese Ausgangsspannung ist, bestimmen, ob und welche Schachfigur auf dem betreffenden Feld der Spalte (h) steht.

Beim nächsten Meßvorgang wird mittels des Signalgebers 4 die Spannung $+ U_B$ an die Teilfelder der Spalte (a) gelegt usw., so daß zyklisch sämtliche Felder der Schachbrettmatrix abgefragt werden können.

Eine gegenüber der Anordnung gem. Fig. 6 schaltungstechnisch vereinfachte Anordnung ist im Blockschaltbild gem. Fig. 7 ebenfalls anhand eines Schachspieles dargestellt.

Das Schachbrett 1 weist in bekannter Weise jeweils acht Spalten und acht Reihen gleich großer Felder 10 auf, die entsprechend den oben stehenden Ausführungen in zwei gleich große Teilfelder unterteilt sind. Die Teilfelder jeweils einer Spalte sind untereinander verbunden und an jeweils einen von acht Ausgängen eines Signalgebers 4 in Form eines 8-Bit-Latch angeschlossen. Das 8-Bit-Latch weist neben den acht Ausgängen und dem Spannungsanschluß an die Spannung $+ U_B$ drei Addresseingänge A0 bis A2 auf.

Die verbleibenden Teilfelder jedes Feldes sind reihenweise untereinander und mit jeweils einem Eingang eines Multiplexers 5 verbunden. Der Multiplexer 5 weist ebenfalls drei Adresseingänge A3 bis A5 auf und ist ausgangsseitig mit einem Eingang eines Operationsverstärkers 7 verbunden. Der Operationsverstärker-Ausgang ist an den Eingang eines Analog/Digital-Wandlers 8 angeschlossen, dessen Digitalausgang bzw. digitale Ausgänge mit dem Eingang eines Prozessors 31 verbunden ist bzw. sind. Der Prozessor 31 ist wechselseitig mit einem Speicher 32, beispielsweise einem RAM-Speicher verbunden. Die jeweils drei Adresseingänge des 8-Bit-Latch 4 sowie des Multiplexers 5 sind an Adressausgänge des Prozessors 31 angeschlossen. Eine Ausgangsleitung des Prozessors 31 führt wahlweise zu einer nicht näher dargestellten Anzeigeeinrichtung bzw. zu einer die Identifizierungs- und Stellungssignale weiterverarbeitenden Einrichtung.

Gesteuert von den Adressausgängen des Prozessors 31 wird mittels des 8-Bit-Latch die Spannung $+ U_B$ zyklisch von einer Spalte zur anderen umgeschaltet, so daß jeweils die Teilfelder einer Spalte des matrixförmigen Schachfeldes mit der Spannung $+ U_B$ beaufschlagt sind. Von den Adressausgängen A3 bis A5 gesteuert, schaltet der Multiplexer 5, der mit den acht Reihen der Schachbrettmatrix verbunden ist, von einer Reihe zur anderen um und leitet somit den Meßwert jedes Teilfeldes jeder Reihe an den Eingang des Verstärkers 7. Da in jeweils einer Reihe bis auf das Feld, dessen Spalte mit der Spannung $+ U_B$ beaufschlagt ist, alle Spannungen Null sind, wird nur der Strom durch jeweils einen (komplexen) Widerstand einer Spalte gemessen, wobei der komplexe Widerstandswert von der jeweiligen, auf dem betreffenden Feld positionierten Schachfigur abhängt. Der erfaßte Meßwert wird mittels des Verstärkers 7 verstärkt und im Analog/Digital-Wandler 8 in ein digitales Signal umgesetzt, das entweder parallel oder seriell an den Eingang bzw. an mehrere Eingänge des Prozessors 31 abgegeben wird.

Durch einen Vergleich mit im Speicher 32 gespeicherten digitalen Signalen für die einzelnen Schachfiguren wird durch einen geeigneten Programmablauf bestimmt, welcher Schachfigur das vom Analog/Digital-Wandler 8 abgegebene digitale Signale zuzuordnen ist. Infolge der Ansteuerung des 8-Bit-Latch 4 und des Multiplexer 5 über die Adressleitungen A0 bis A5 kann der Prozessor 31 darüber hinaus bestimmen, welches Feld aus den 64 Feldern der Schachbrettmatrix gerade abgefragt wird und ob sowie mit welcher Figur entsprechend dem erfaßten digitalen Signal dieses betreffende Feld belegt ist. Dementsprechend werden Signale $X_1$, $X_2$ für die Stellung und Identität der betreffenden Schachfigur abgegeben.

Wie der Darstellung gem. Fig. 7 zu entnehmen ist, sind die mit den Ausgängen des 8-Bit-Latch 4 verbundenen Teilfelder als Leiterstreifen ausgebildet, während die mit den Eingängen des Multiplexers 5 verbundenen anderen Teilfelder als isolierte Rechtecke ausgebildet sind, die jedoch reihenweise untereinander sowie mit dem betreffenden Eingang des Multiplexers 5 verbunden sind. Zur Potentialtrennung sind Isolierstreifen 19 zwischen den einzelnen Feldern vorgesehen.

Die Leiterplattenkonfiguration des Schachbrettes gem. Fig. 7 kann beispielsweise in der Weise hergestellt werden, daß eine leitfähige Folie, die die durchgehenden Spaltenhälften der Felder sowie die einzelnen isolierten Felder als leitfähige Folienelemente aufweist, auf eine Holzplatte aufgeklebt wird, so daß auf diese Weise die Isolierabschnitte 19 gebildet werden.

Als Beispiel für einen 8-Bit-Latch kann der 8-Bit-Latch HEF40373B angeführt werden, während als Multiplexer der 8-Kanal-Analog-Multiplexer/Demultiplexer HEF4051B verwendet werden kann.

Anstelle eines Analog/Digital-Wandlers kann beispielsweise auch ein Spannungs/Frequenz-Wandler eingesetzt werden, der auf eine bestimmte Eingangsspannung eine bestimmte Frequenz abgibt, die beispielsweise über Filterglieder zur Bestimmung des betreffenden Gegenstandes auf dem gemessen

EP 0 289 519 B1

Feld dienen. Es ist aber auch jede andere Konfiguration möglich, bei der ein bestimmter Meßwert einem bestimmten Gegenstand zugeordnet wird.

Obwohl die Ohm'sche Widerstandsmessung als besonderes Ausführungsbeispiel dargestellt wurde, läßt sich in völlig analoger Weise auch die Messung komplexer Widerstände bei Anlegen einer Wechselspannung durchführen, ohne daß der aufgezeigte Lösungsweg verlassen wird.

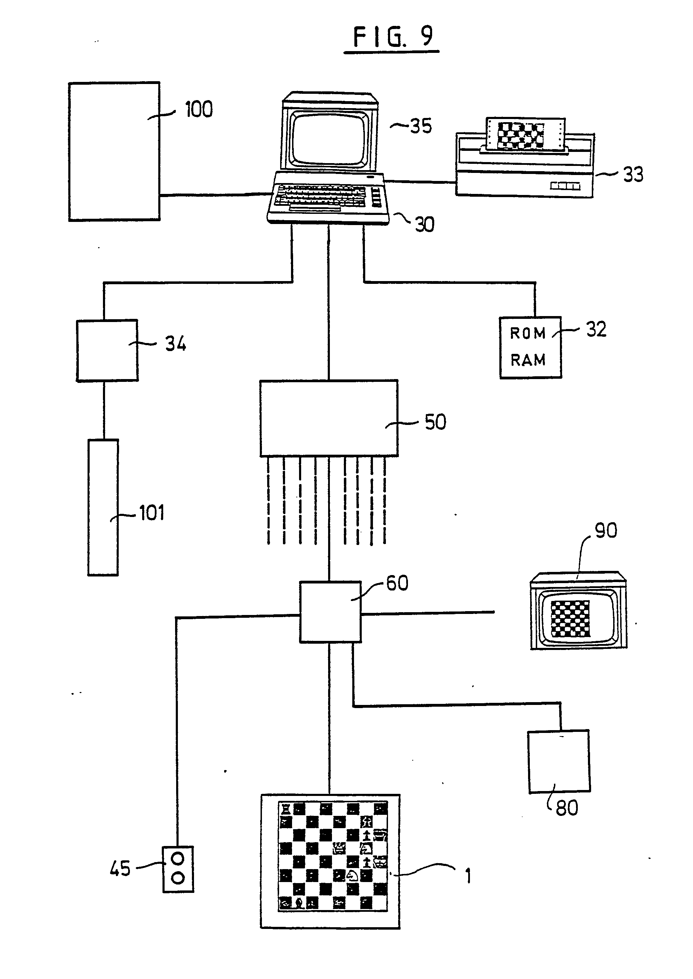

Das in Fig. 9 dargestellte Blockschaltbild des prinzipiellen Aufbaus einer Anordnung zum Überwachen, Anzeigen, Kommentieren und Dokumentieren von Schachpartien enthält ein elektronisches Schachbrett 1, dessen Ausgang mit einer Video-Schnittstelle 60 verbunden ist, an dessen weitere Eingänge eine Schachuhr 45 und eine Eingabetastatur 80 angeschlossen sind, und dessen Ausgänge sowohl mit einem Video-Anzeigegeräte 90 als auch einem Eingang einer Abtast- und Speichereinrichtung 50 verbunden sind.

Die Abtast- und Speichereinrichtung 50 ist mit mehreren, gleichartigen Video-Schnittstellen mit daran angeschlossenem elektronischen Schachbrett, Eingabetastatur, Schachuhr und Video-Anzeigegrät verbunden, wobei die Anzahl der angeschlossenen Video-Schnittstellen beliebig variiert werden kann. Der Ausgang der Abtast- und Speichereinrichtung 50 ist an den Eingang einer Datenverarbeitungseinrichtung 30 angeschlossen, die beispielsweise aus einem Personal Computer oder aus einer größeren Mehrzweck-Datenverarbeitungsanlage bestehen kann.

Die Datenverarbeitungseinrichtung 30 ist ausgangsseitig mit einem Monitor 35, einer Großbildleinwand 100 und einem Drucker 33 verbunden, der vorzugsweise aus einem Laserstrahldrucker besteht. Darüber hinaus ist die Datenverarbeitungseinrichtung 30 wechselseitig mit einem Speicher 32 verbunden, der vorzugsweise sowohl einen Lesespeicher als auch einen Speicher mit wahlfreiem Zugriff enthält.

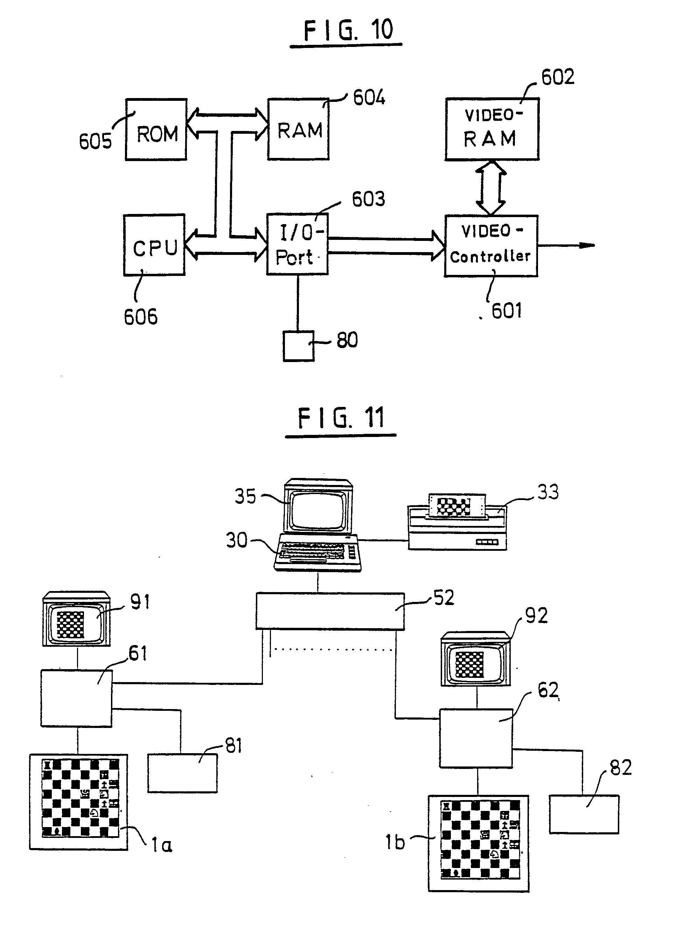

Fig. 10 zeigt ein Beispiel für den internen Aufbau der Video-Schnittstelle, die einen Eingabe/Ausgabe-Baustein 603 enthält, der sowohl mit der Schachuhr 45, dem elektronischen Schachbrett 1 als auch der Eingabetastatur 80 verbunden ist. Der Eingabe/Ausgabe-Baustein 603 ist über einen Adress- und Datenbus sowohl mit einem Prozessor 606 als auch einem Speicher mit wahlfreiem Zugriff 604 und einem Lesespeicher 605 verbunden. Ausgangsseitig ist an den Eingabe/Ausgabe-Baustein ein Video-Controller 601 angeschlossen, wobei vorzugsweise acht Ausgabeleitungen den Eingabe/Ausgabe-Baustein 603 mit dem Video-Controller 601 verbinden. Der Video-Controller 601 ist über einen internen Video-Controller-Bus mit einem Video-RAM 602 verbunden, in dem Bildwiederholungen sowie verschiedene, für die Kommentierung und Überwachung sowie Anzeige von Spielzügen, dem Schachbrett oder dgl. erforderliche Zeichen gespeichert sind. Ausgangsseitig ist der Video-Controller 601 mit dem Video-Anzeigegerät oder Monitor 90 verbunden.

Das vorstehend dargestellte und erläuterte elektronische Schachbrett 1 ist in der Lage, sowohl die Stellung bzw. Qualität der einzelnen Schachfiguren zu erfassen und die entsprechende Belegung der einzelnen Schachfelder in Form elektrischer Signale an die Video-Schnittstelle 60 abzugeben. Die Video-Schnittstelle 60 setzt die eingegebenen elektrischen Signale zu einem entsprechenden Bild des Schachbrettes 1 mit einem der jeweiligen Stellung der Schachfiguren entsprechenden Bild zusammen und gibt dieses zusammengesetzte Bild als Video-Signal in an sich bekannter Weise an den Monitor bzw. das Video-Anzeigegerät 90 ab. Zusätzlich kann die Spielzeit und/oder die von jedem der Spieler verbrauchte Bedenkzeit, die mittels der Schachuhr 19 erfaßt wird, in das auf dem Monitor 90 angezeigte Bild eingeblendet, bzw. als fortlaufende Zeit am oberen oder unteren Rand des Bildes auf dem Monitor 90 angezeigt werden.

Darüber hinaus ist es möglich, einen Kommentar zu der jeweiligen Schachpartie über die Eingabetastatur 80 einzugeben, der ebenfalls auf dem Monitor 90 zur Anzeige gebracht werden kann. Ein derartiger Kommentar kann beispielsweise darin bestehen, daß der jeweils letzte Zug durch farbiges Markieren der betreffenden Spielfelder angezeigt wird. Des weiteren ist es möglich, die von einer Schachfigur beherrschten Felder einer Reihe, Spalte oder Diagonalen durch farbiges Markieren oder durch Helligkeitsunterschiede bei einem Schwarz/Weiß-Bild anzuzeigen. Eine weitere Möglichkeit besteht darin, Alternativzüge zum tatsächlich durchgeführten Zug oder die aus einem Zug resultierenden Folgezüge aufzuzeigen.

Die von der Video-Schnittstelle 60 erfaßten Signale bezüglich der Stellung und Qualität der Schachfiguren auf dem elektronischen Schachbrett 1 werden ggf. zusammen mit der Zeitanzeige und der Kommentierung an die Abtast- und Speichereinrichtung 50 abgegeben.

Die Abtast- und Speichereinrichtung 50 speichert die von den einzelnen Video-Schnittstellen 60 abgegebenen Daten zusammen mit den Adressen der betreffenden Video-Schnittstellen 60 und gibt die gespeicherten Daten der einzelnen Video-Schnittstellen auf Abruf bzw. zyklisch oder nach Maßgabe eines bestimmten, vorgegebenen Programms an die Datenverarbeitungseinrichtung 30 ab. Die Datenverarbeitungseinrichtung 30 verarbeitet die Spieldaten sowie die Turnierdaten und ist darüber hinaus in der Lage, administrative Aufgaben wie Turniereinladungen, Anfertigen von Spielberichten und dgl. auszuführen.

Darüber hinaus besteht die Möglichkeit, daß die Datenverarbeitungseinrichtung 30 speziell angewählte elektronische Schachbretter 1 zur Anzeige auf der Großbildleinwand 100 oder den Monitor 35 bringt. Sämtliche, an den einzelnen elektronischen Schachbrettern 1 durchgeführte Partien werden im Drucker 33 ausgedruckt und ggf. im Speicher 32 zusammen mit einer Kennung abgelegt, so daß in beliebiger Weise auf die einzelnen Schachpartien zurückgegriffen werden kann. Über ein Modem 34 können einzelne oder ausgewählte Daten an ein Fernübertragungsnetz 101 abgegeben werden, von wo aus die entsprechenden Turnier- und Partiendaten an einem anderen Ort abgefragt, angezeigt oder in ein Fernsehnetz eingespeist werden können.

Das unmittelbare Ausdrucken der einzelnen Schachpartien im Drucker 33 ermöglicht einen Verzicht auf das Anfertigen einzelner Spielprotokolle durch einen Protokollführer oder durch die Schachspieler selbst, so daß die Schachspieler von entsprechenden Verwaltungsaufgaben entlastet werden. Darüber hinaus besteht die Möglichkeit, daß unmittelbar nach Abschluß der letzten, hängenden Partie oder je nach Bedeutung dieser letzten Partie bereits vorher der Spielstand angezeigt und ausgedruckt werden kann, so daß Turnierergebnisse wesentlich früher vorliegen, als dies bei den derzeit durchgeführten Turnieren der Fall ist, wo sämtliche Partien von der Turnierleitung manuell auszuwerten sind.

Da die Legalitätskontrolle, d.h. die Kontrolle über die Zulässigkeit einzelner Spielzüge bereits in der Video-Schnittstelle 60 bzw. im elektronischen Schachbrett 1 durchgeführt wird, können die Schiedsrichterfunktionen erheblich vereinfacht werden, da unzulässige Züge bereits in diesem Stadium bzw. auf dieser Ebene zurückgewiesen werden. Der jeweilige Fehler kann protokolliert und im Spielbericht angezeigt und ausgedruckt werden. Ebenfalls können Zeitüberschreitungen sofort angezeigt und von der Turnierleitung berücksichtigt werden. Im Extremfall ist es möglich, nur einen Schiedsrichter an zentraler Stelle, d.h. an der Datenverarbeitungseinrichtung 30 einzusetzen, der eine Kontrolle sämtlicher Spiele durchführt und lediglich im Falle von Differenzen in die einzelnen Partien eingreift.

Eine weitere, vorteilhafte Einsatzmöglichkeit der Anordnung besteht in der Durchführung von Simultanpartien, bei denen ein einzelner Spieler gegen eine Vielzahl Gegner antritt, was bisher in der Weise erfolgte, daß der Einzelspieler nacheinander zu den einzelnen Schachbrettern ging, um jeweils seinen Zug durchzuführen. Mit der beschriebenen Anordnung ist es möglich, daß der Einzelspieler nacheinander die einzelnen Schachpartien auf dem an die Datenverarbeitungseinrichtung 30 angeschlossenen Monitor 35 zur Anzeige bringt und durch Eingabe in die Tastatur der Datenverarbeitungseinrichtung 30 seine Gegenzüge mitteilt, die beispielsweise durch entsprechendes Blinken von auf den Schachfeldern der elektronischen Schachbretter angeordneten Leuchtdioden seinen Gegenzug anzeigen. Es liegt selbstverständlich im Rahmen der vorliegenden Erfindung, daß die Übertragungsleitungen nicht nur von den einzelnen elektronischen Schachbrettern 1 über die Video-Schnittstellen 60 zu der Abtast- und Speichereinrichtung und weiter zur Datenverarbeitungseinrichtung 30, sondern auch in umgekehrter Weise verlaufen können.

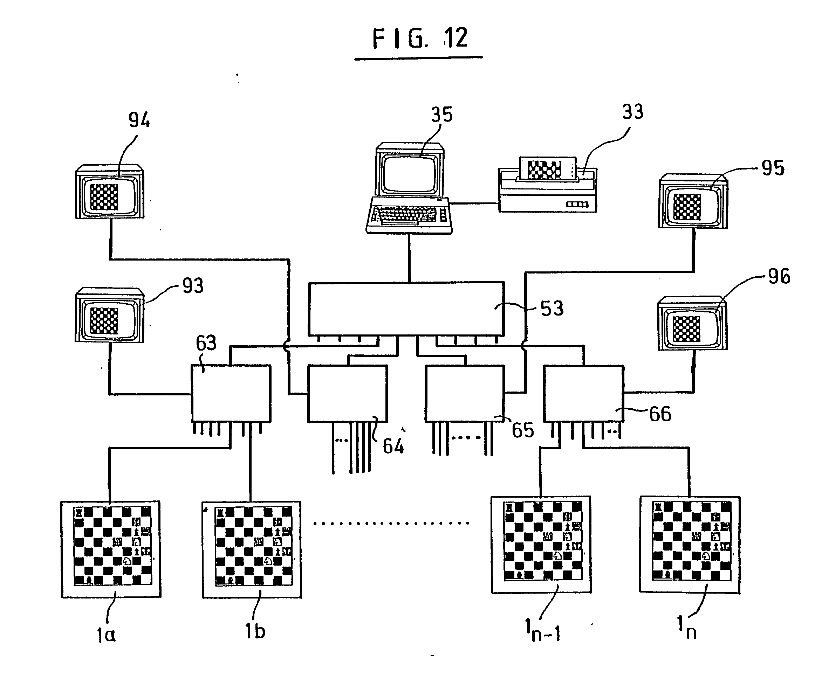

Verschiedene Möglichkeiten zur Verknüpfung der einzelnen elektronischen Schachbretter mit der zentralen Datenverarbeitungseinrichtung sind in den Fig. 11 und 12 dargestellt.

Fig. 11 zeigt die Verbindung von bis zu 256 elektronischen Schachbrettern 1a, 1b über Video-Schnittstellen 61, 62 mit einer Abtasteinrichtung 52, die beispielsweise aus einem Multiplexer besteht, der die auf den Leitungen 1 bis 256 eingehenden Ausgangssignale der einzelnen Video-Schnittstellen erfolgt.

Der Multiplexer 52 fragt die einzelnen an den Eingängen angeschlossenen Video-Schnittstellen 61, 62 ab und leitet die abgefragten Signale an die Datenverarbeitungseinrichtung 30 weiter.

Hier werden die Daten der einzelnen Einheiten gespeichert und mittels des Druckers 33 ausgedruckt bzw. auf eine entsprechende Auswahl auf dem Monitor 35 angezeigt bzw. ausgewertet.

Jede der Video-Schnittstellen 61, 62 ist mit einer Eingabetastatur 81, 82 verbunden, so daß die einzelnen an den elektronischen Schachbrettern 1a, 1b durchgeführten Spiele kommentiert werden können. Darüber hinaus ist jede Video-Schnittstelle 61, 62 mit einem eigenen Monitor 91, 92 versehen, so daß die auf den elektronischen Schachbrettern 1a, 1b durchgeführten Spiele individuell auf dem zugeordneten Monitor 91 bzw. 92 zusammen mit den jeweiligen, über die Eingabetastatur 81, 82 eingegebenen Kommentare angezeigt werden.

Bei der in Fig. 12 dargestellten Anordnung sind mehrere elektronische Schachbretter 1a, 1b zw. 1n — 1' 1n an Eingänge jeweils einer Video-Schnittstelle 63, 64, 65, 66 angeschlossen, so daß eine Vielzahl von Schachbrettern einer Video-Schnittstelle 63, 64, 65, 66 zugeordnet sind. Analog zu den vorstehend beschriebenen Anordnungen ist die Video-Schnittstelle 63, 64, 65, 66 mit einer Eingabetastatur sowie jeweils einem Monitor 93, 94, 95, 96 verbunden. Auf diese Weise lassen sich beispielsweise jeweils zehn elektronische Schachbretter gruppenweise über Video-Schnittstellen 63 bis 66 zusammenfassen, so daß über die Eingabetastatur jeweils eines der zehn Schachspiele kommentiert und auf dem Monitor 93 angezeigt werden kann. Ein Netzwerk-Controller 53 ist mit den Ausgängen der verschiedenen Video-Schnittstellen 63 bis 66 verbunden. Der Netzwerk-Controller 53 tastet die Ausgänge der verschiedenen Videoschnittstellen 63 bis 66 ab und speichert die Werte und gibt die gespeicherten Werte sequentiell oder programmgesteuert an die Datenverarbeitungseinrichtung 30 ab.

Auf diese Weise werden beispielsweise 30 Eingänge des Netzwerk-Controllers 53 belegt, so daß bei jeweils 10 an eine Video-Schnittstelle angeschlossenen elektronischen Schachbrettern insgesamt 300 elektronische Schachbretter 1a bis 1n erfaßt werden.

In der zuvor beschriebenen Weise verarbeitet die Datenverarbeitungseinrichtung 30 die über den Netzwerk-Controller 53 eingegebenen Daten und druckt entsprechende Spielprotokolle auf einem Drucker 33 aus und bringt einzelne, ausgewählte Schachspiele auf dem Monitor 35 bzw. einer Großbildleinwand 100 zur Anzeige. Darüber hinaus besteht in der bereits beschriebenen Weise die Möglichkeit, sämtliche Turnierdaten oder ausgewählte Partien eines Turniers über ein Modem und eine Fernübertragungsleitung

9

zu einem beliebigen Ort zu übertragen, wo die Daten zur Anzeige oder Auswertung weiterverarbeitet werden.

Die in Fig. 12 dargestellte Anordnung bietet sich insbesondere für die Durchführung größerer Turniere an, da beispielsweise jeweils eine Video-Schnittstelle mit einem Schiedsrichter bzw. Kommentator besetzt werden kann, der eine überschaubare Anzahl von Schachpartien überwacht bzw. kommentiert. Da sämtliche, bei den Video-Schnittstellen eingehenden Daten an den Netzwerk-Controller 53 weitergeleitet werden, ist ein vollständiges Protokollieren und Nachvollziehen einzelner Partien in der Datenverarbeitungseinrichtung 30 möglich. Darüber hinaus wird sichergestellt, daß die Spielergebnisse unmittelbar erfaßt und zur Ermittlung des Turniersiegers verwendet werden.

Durch das automatische Protokollieren der einzelnen Spiele wird zusätzlich sichergestellt, daß insbesondere in der Endphase von Turnierspielen, wo die ingesamt zweistündige Bedenkzeit für jeden Spieler nahezu aufgebraucht ist die Spieler von überflüssigen Schreibarbeiten befreit werden. Durch Speicherabruf ist es ohne weiteres möglich, einzelne Partien nachzuvollziehen und auch nach Beendigung des Turnieres auf einem Monitor zur Anzeige zu bringen. Auf diese Weise lassen sich besonders interessante Spiele jeder Zeit nachvollziehen und zu Lehr- und Demonstrationszwecken einsetzen.

**Patentansprüche**

1. Verfahren zum Festellen der Identität und Stellung von Gegenständen, die mit einer Kennungseinrichtung versehen sind und sich in verschiedenen Feldern eines in eine vorbestimmte Anzahl gleich großer Felder unterteilten Bereiches befinden, wobei die Felder abgetastet und die Signale der Kennungseinrichtungen der Gegenstände von einer Auswerteinrichtung erfaßt werden, die den einzelnen Gegenständen zugeordnete Signale speichert, mit den veränderten Signalen vergleicht und der Identität und Stellung der Gegenstände entsprechende Signale abgibt, insbesondere zum Feststellen der Identität und Stellung von Schachfiguren auf einem Schachbrett, dadurch gekennzeichnet, daß die Felder (10) in mindestens zwei Teilfelder (11, 12) unterteilt sind un ein erster und zweiter Teil der Teilfelder (11, 12) eines Feldes (10) von jeweils einer eine Impedanz (21, 22, 23) aufweisenden Kennungseinrichtung überbrückt wird, und daß eine Messung der Impedanz (21, 22, 23) zwischen dem ersten und zweiten Teil der Teilfelder (11, 12) vorgenommen wird, indem an den ersten Teil der Teilfelder (11, 12) ein elektrisches Eingangssignal gelegt wird und die Auswerteinrichtung (3) das elektrische Ausgangssignal an dem zweiten Teil der Teilfelder (11, 12) erfaßt.

2. Verfahren nach Anspruch 1, dadurch gekennzeichnewt, daß die einzelnen Felder (10) sequentiell angesteuert und abgetastet werden.

3. Verfahren nach Anspruch 2, dadurch gekennzeichnet, daß die Felder (10) im Multiplexverfahren abgetastet werden.

4. Verfahren nach Anspruch 1, dadurch gekennzeichnet, daß das elektrische Signal aus einer Gleichspannung ($U_B$) und die Impedanz der Kennungseinrichtung aus einer Widerstandsanordnung (21, 22, 23) besteht, daß die Gleichspannung ($U_B$) sequentiell unter Steuerung eines Taktgebers (6) an den ersten Teil eines Teilfeldes (11, 12) angelegt wird und die einzelnen Felder (10) im Multiplexverfahren von der Auswerteinrichtung (3) zeitgleich mit dem jeweils angesteuerten Feld (10) abgetastet werden und der bei Belegung eines Feldes (10) mit einem Gegenstand (2) fließende Strom durch die jeweilige Widerstandsanordnung (21, 22, 23) gemessen wird.

5. Verfahren nach Anspruch 4, dadurch gekennzeichnet, daß die gemessenen analogen Signale ($U_A$) in digitale Signale (D) umgewandelt und einem Prozessor (31) zugeführt werden, der die digitalen Meßsignale (D) mit gespeicherten, den einzelnen Gegenständen (2) zugeordneten digitalen Signalen (Y) vergleicht und bei Übereinstimmung ein die Stellung und die Identität des betreffenden Gegenstandes entsprechendes Signal ($X_1, X_2$) abgibt.

6. Vorrichtung zum Festellen der Identität und Stellung von Gegenständen, die mit einer Kennungseinrichtung versehen sind und sich in verschiedenen Feldern eines in eine vorbestimmte Anzahl gleich großer Felder unterteilten Bereiches befinden, wobei die Felder abtastbar sind und eine Auswerteinrichtung die Signale der Kennungseinrichtungen der Gegenstände erfaßt und den einzelnen Gegenständen zugeordnete Signale speichert, mit den erfaßten Signalen vergleicht und der Identität und Stellung der Gegenstände entsprechende Signale abgibt, insbesondere zum Feststellen der Identität und Stellung von Schachfiguren auf einem Schachbrett, dadurch gekennzeichnet, daß jedes der Felder (10) des Bereiches (1) in mindestens zwei Teilfelder (11, 12) unterteilt ist, daß die die Felder (10) des Bereiches (1) berührende Fläche der Gegenstände (2) in jeder Stellung der Gegenstände (2) auf einem Feld (10) zwei Teilfelder (11, 12) wenigstens teilweise überdeckt, daß jeder der Gegenstände (2) eine vorbestimmte Widerstandsanordnung (21, 22, 23) aufweist, die mit mindestens zwei Kontaktpunkten (24, 25, 26) verbunden ist, die auf der das betreffende Feld (10) berührenden Fläche jeweils ein Teilfeld (11, 12) kontaktieren, und daß das eine Teilfeld (11) mit einem, ein vorbestimmtes elektrisches Signal abgebenden Signalgeber (4) und das andere Teilfeld (12) mit einem Signalempfänger (5) verbunden ist, der bei Belegung eines Feldes (10) mit einem Gegenstand (2) infolge der Widerstandsanordnung (21, 22, 23) des betrffenden Gegenstandes (2) ein verändertes Signal ($U_A$) erfaßt und an die Auswerteinrichtung (3) abgibt, die die Belegung des betreffenden Feldes (10) des Bereiches (1) anzeigt und durch einen Vergleich des veränderten Signals ($U_A$) mit gespeicherten Werten (Y) veränderter Signale für die einzelnen Gegenstände (2) ein die Identität und Stellung des betreffenden Gegenstandes (2) anzeigendes Signal ($X_1$, $X_2$) abgibt.

7. Vorrichtung nach Anspruch 6, dadurch gekennzeichnet, daß die Auswerteinrichtung mit dem Signalgeber (4) verbunden ist und kodierte Signale (A0, A1, A2) zur sequentiellen Ansteuerung der Teilfelder (11) an den Signalgeber (4) abgibt, der ein Gleichspannungssignal sequentiell an die einen Teilfelder (11) anlegt und daß der Signalempfänger (5) aus einem Multiplexer besteht, der die an den einzelnen Teilfeldern (12) anliegenden Signale nacheinander abfragt und an die Auswerteinrichtung (3) abgibt.

8. Vorrichtung nach Anspruch 6, dadurch gekennzeichnet, daß die Widerstandsanordnung (21, 22, 23) aus drei in einem gleichseitigen Dreieck angeordneten Ohm'schen Widerständen besteht, deren Eckpunkte die Kontaktpunkte (24, 25, 26) bilden.

9. Vorrichtung nach den Ansprüchen 6 und 8 zum Feststellen der Identität und Stellung von Schachfiguren auf einem Schachbrett, dadurch gekennzeichnet, daß die 64 quadratischen Felder (10) mit der Seitenlänge D aus jeweils zwei gleich großen Teilfeldern (11, 12) mit einer dazwischen angeordneten Isolierschicht (13) bestehen und daß die an der Unterseite der Schachfiguren angeordneten Kontaktpunkte (24, 25, 26) die Gleichung

$$H > \frac{D}{2}$$

erfüllen, worin H die Höhe des gleichseitigen Dreiecks ist.

10. Vorrichtung nach den Ansprüchen 6 und 8 zum Feststellen der Identität und Stellung von Schachfiguren auf einem Schachbrett, dadurch gekennzeichnet, daß die 64 quadratischen Felder (10) mit der Seitenlänge D aus jeweils drei gleich großen Teilfeldern (14, 15, 16) mit dazwischen angeordneten Isolierschichten (17, 18) bestehen und daß die an der Unterseite der Schachfiguren angeordneten Kontaktpunkte (24, 25) die Gleichung

$$H \geqq \frac{D}{3}$$

erfüllen, worin H die Höhe des gleichseitigen Dreiecks ist.

11. Vorrichtung nach einem der vorangehenden Ansprüche 6 bis 10, dadurch gekennzeichnet, daß der Durchmesser der Kontaktpunkte (24, 25, 26) geringfügig kleiner als die Dicke der Isolierschichten (13, 17, 18) ist.

12. Vorrichtung nach einem der vorangehenden Ansprüche 6 bis 11, dadurch gekennzeichnet, daß der Signalgeber aus einem 8-Bit-Latch (4) besteht, dessen drei Adresseneingänge mit drei ersten Adressenausgängen (A0 bis A2) der Auswerteinrichtung und dessen acht Ausgänge mit den acht Spalten ((a bis h)) des Schachbrettes (1) verbunden sind und daß der Signalempfänger aus einem 8-Bit-Multiplexer (5) besteht, dessen acht Eingänge mit den acht Reihen ((1 bis 8)) des Schachbrettes (1) und dessen drei Adresseneingänge mit drei zweiten Adressenausgängen (A3 bis A5) der Auswerteinrichtung verbunden sind.

13. Vorrichtung nach Anspruch 12, dadurch gekennzeichnet, daß daß der Ausgang des Multiplexers (5) über einen Analog/Digital-Wandler (8), der den von einem mit einer Schachfigur besetzten Feld erfaßten Gleichstromwert in ein Digitalsignal umwandelt, mit einem Prozessor (31) verbunden ist, der das vom Analog/Digital-Wandler (8) abgegebene Digitalsignal mit den für die jeweilige Schachfigur gespeicherten Werten vergleicht und bei Übereinstimmung ein die Identität und Stellung der betreffenden Schachfigur bezeichnendes Signal ($X_1$, $X_2$) abgibt.

14. Vorrichtung nach einem der vorangehenden Ansprüche 6 bis 13, dadurch gekennzeichnet, daß der Ausgang des Multiplexers (5) über einen Spannungs/Frequenz-Wandler, der den von einem mit einer Schachfigur besetzten Feld erfaßten Gleichstromwert in ein Signal bestimmter Frequenz umwandelt, mit einem Prozessor (31) verbunden ist, der das vom Spannungs/Frequenz-Wandler abgegebene Frequenzsignal mit den für die jeweilige Schachfigur gespeicherten Frequenzwerten vergleicht und bei Übereinstimmung ein die Identität und Stellung der betreffenden Schachfigur bezeichnendes ·Signal ($X_1$, $X_2$) abgibt.

15. Vorrichtung nach einem der vorangehenden Ansprüche 6 bis 14, dadurch gekennzeichnet, daß die Teilfelder (11, 12, 14, 15, 16) sowie die dazwischen angeordneten Isolierschichten (13, 17, 18) durch eine auf eine elektrisch isolierende Platte befestigte leitfähige Folie gebildet sind, wobei die leitfähige Folie der Konfiguration der Teilfelder (11, 12, 14, 15, 16) entspricht.

16. Vorrichtung nach einem der vorangehenden Ansprüche 6 bis 15 für ein Schachspiel mit einer Schachbrettmatrix mit in jeweils acht Reihen und Spalten aneinandergereihten quadratischen Feldern, dadurch gekennzeichnet, daß die mit dem Signalgeber (4) verbundenen Teilfelder (11) untereinander durchgehend verbunden sind und daß die mit dem Signalempfänger (5) verbundenen Teilfelder (12) jeweils einer Reihe untereinander und mit dem als Multiplexer ausgebildeten Signalempfänger (5) verbunden sind.

17. Verfahren nach Anspruch 1 zum Überwachen, Anzeigen, Kommentieren und Dokumentieren von Schachpartien, dadurch gekennzeichnet, daß das die Stellung und Identität der Schachfiguren erfassende elektronische Schachbrett (1) Stellungs- und Identitätssignale an eine Video-Schnittstelle (60) abgibt, die einerseits Videosignale an ein Video-Anzeigegerät (90) und anderseits Speichersignale an eine Abtast- und Speichereinrichtung (50, 52, 53) abgibt und daß die Abtast- und Speichereinrichtung (50, 52, 53) sowohl die Videosignale als auch die Speichersignale an eine Datenverarbeitungseinrichtung (30) abgibt.

18. Anordnung nach den Ansprüchen 6 bis 16 zur Durchführung des Verfahrens nach Anspruch 17, dadurch gekennzeichnet, daß mindestens ein die Stellung der Schachfiguren erfassendes elektronisches Schachbrett (1) mit einer Video-Schnittstelle (60) verbunden ist, deren Ausgang sowohl an ein Video-Anzeigegerät (90) als auch an eine Abtast- und Speichereinrichtung (50, 52, 53) angeschlossen ist, daß die Abtast- und Speichereinrichtung (50, 52, 53) mit dem Eingang einer Datenverarbeitungseinrichtung (30) verbunden ist und daß die Video-Schnittstelle (60) mit einer Eingabetastatur (80) zur Eingabe von Kennungen oder Spielinformationen, die auf dem Video-Anzeigegerät (90) angezeigt und/oder an die Datenverarbeitungseinrichtung (30) abgegeben werden, und daß die Video-Schnittstelle (60) mit einer von den Schachspielern bedienbaren Schachuhr (45) verbunden ist.

19. Anordnung nach Anspruch 18, dadurch gekennzeichnet, daß mehrere mit jeweils einem elektronischen Schachbrett (1a bis 1n) verbundene Video-Schnittstellen (61 bis 66) an getrennte Eingänge der Abtast- und Speichereinrichtung (50) angeschlossen sind.

20. Anordnung nach Anspruch 18 oder 19, dadurch gekennzeichnet, daß die Datenverarbeitungseinrichtung (30) ausgangsseitig mit einem Video-Anzeigegerät (38) und/oder einem Drucker (33), vorzugsweise einem Laserstrahldrucker und/oder mit einer Großbild-Leinwand (100) verbunden ist.

21. Anordnung nach einem der vorangehenden Ansprüche 18 bis 20, dadurch gekennzeichnet, daß die Abtast- und Speichereinrichtung (50) aus einem Netzwerk-Controller (53) besteht, an dessen Eingänge die Ausgänge mehrerer Video-Schnittstellen (63 bis 66) angeschlossen sind, deren Daten im Netzwerk-Controller (53) gespeichert und zyklisch oder programmgesteuert an die Datenverarbeitungseinrichtung (30) abgegeben werden.

22. Anordnung nach einem der vorangehenden Ansprüche 18 bis 21, dadurch gekennzeichnet, daß die Datenverarbeitungseinrichtung (30) über ein Moden (34) an ein Fernübertragungsnetz (101) angeschlossen ist.

23. Anordnung nach Anspruch 18, dadurch gekennzeichnet, daß die Video-Schnittstelle (60) einen Video-Controller (601) enthält, der mit einem Eingabe/Ausgabe-Baustein (603) und einem Video-RAM (602) verbunden ist, und daß bei entsprechender Betätigung der Eingabetastatur (80) einzelne oder Gruppen von Schachbrettfelder durch Farb- oder Helligkeitsunterschiede Hervorgehoben werden.

24. Anordnung nach Anspruch 23, dadurch gekennzeichnet, daß die Video-Schnittstelle (60) einen Prozessor (606) aufweist, der über einen Adreß- und Datenbus mit einem Nur-Lesespeicher (605) und einem Speicher mit wahlfreiem Zugriff (604) sowie dem Eingabe/Ausgabe-Baustein (603) verbunden ist und daß der Ausgang des Video-Controllers (601) mit dem Video-Anzeigegerät (90) und der Eingabe/ausgabe-Baustein (603) mit einem Eingang des Netzwerk-Controllers (53) verbunden ist.

**Revendications**

1. Procédé de détermination de l'identité et de la position d'objets qui sont pourvus d'un dispositif d'identification et qui se trouvent dans différentes zones d'une région divisée en un nombre prédéterminé de zones de grandeurs égales, les zones étant explorées et les signaux des dispositifs d'identification des objets étant saisis par un dispositif d'évaluation qui stocke des signaux associés aux objets individuels, compare aux signaux modifiés et délivre des signaux correspondant à l'identité et à la position des objets, en particulier pour déterminer l'identité et la position de pièces d'échecs sur un échiquier, caractérisé en ce que les zones (10) sont divisées en au moins deux zones partielles (11, 12) et qu'une première et une seconde des zones partielles (11, 12) d'une zone (10) sont court-circuitées par un dispositif d'identification respectif présentant une impédance (21, 22, 23) et en ce qu'une mesure de l'impédance (21, 22, 23) est réalisée entre la première et la seconde des zones partielles (11, 12) pendant qu'un signal électrique d'entrée est appliqué à la première des zones partielles (11, 12) et que le dispositif d'évaluation (3) saisit le signal électrique de sortie à la seconde des zones partielles (11, 12).

2. Procédé suivant la revendication 1, caractérisé en ce que les zones individuelles (10) sont séquentiellement commandées et explorées.

3. Procédé suivant la revendication 2, caractérisé en ce que les zones (10) sont explorées dans le procédé de multiplexage.

4. Procédé suivant la revendication 1, caractérisé en ce que le signal électrique est constitué par une tension continue ($U_B$) et l'impédance du dispositif d'identification par un agencement de résistance (21, 22, 23), en ce que la tension continue ($U_B$) est appliquée séquentiellement à la première des zones partielles (11, 12) par une commande d'un générateur de rythme (6) et que les zones individuelles (10) sont explorées dans le procédé de multiplexage par le dispositif d'évaluation (3) en même temps que la zone respectivement commandée (10) et en ce qu'est mesuré le courant s'écoulant au travers de l'agencement de résistance respectif (21, 22, 23) lors d'une occupation d'une zone (10) par un objet (2).

12

5. Procédé suivant la revendication 4, caractérisé en ce que les signaux analogiques mesurés ($U_A$) sont convertis en signaux numériques (D) et amenés dans un processeur (31) qui compare les signaux numériques mesurés (D) à des signaux numériques stockés (Y) associés aux objets individuels (2) et qui, lors d'une concordance, délivre un signal ($X_1$, $X_2$) correspondant à la position et à l'identité de l'objet en question.

6. Dispositif de détermination de l'identité et de la position d'objets qui sont pourvus d'un dispositif d'identification et qui se trouvent dans différentes zones d'une région divisée en un nombre prédéterminé de zones de grandeurs égales, les zones pouvant être explorées, un dispositif d'évaluation saisissant les signaux des dispositifs d'identification des objets et stockant des signaux associés aux objets individuels, comparant aux signaux saisis et délivrant des signaux correspondant à l'identité et à la position des objets, en particulier de détermination de l'identité et de la position de pièces d'échecs sur un échiquier, caractérisé en ce que chacune des zones (10) de la région (1) est divisée en au moins deux zones partielles (11, 12), en ce que la surface des objets (2) qui entre en contact avec les zones (10) de la région (1) recouvre au moins partiellement, pour chaque position des objets (2) sur une zone (10), deux zones partielles (11, 12), en ce que chacun des objets (2) présente un agencement de résistance prédéterminé (21, 22, 23) relié à au moins deux points de contact (24, 25, 26) qui, sur la surface en contact avec la zone (10) en question, entrent en contact avec respectivement une zone partielle (11, 12), et en ce qu'une des zones partielles (11) est reliée à un émetteur de signal (4) délivrant un signal électrique prédéterminé et que l'autre zone partielle (12) est reliée à un récepteur de signal (5) qui, lors d'une occupation d'une zone (10) par un objet (2), saisit, suite à l'agencement de résistance (21, 22, 23) de l'objet (2) en question, un signal modifié ($U_A$) et le délivre au dispositif d'évaluation (3) qui indique l'occupation de la zone (10) en question de la région (1) et qui, par une comparaison du signal modifié ($U_A$) à des valeurs stockées (Y) de signaux modifiés des objets individuels (2), délivre un signal ($X_1$, $X_2$) indiquant l'identité et la position de l'objet (2) en question.

7. Dispositif suivant la revendication 6, caractérisé en ce que le dispositif d'évaluation est relié à l'émetteur de signal (4) et délivre des signaux codés (A0, A1, A2), destinés à l'excitation séquentielle de la zone partielle (11), à l'émetteur de signal (4) qui applique séquentiellement un signal de tension continue à l'une des zones partielles (11) et en ce que le récepteur de signal (5) consiste en un multiplexeur qui lit les uns après les autres les signaux appliqués aux zones partielles individuelles (12) et délivre ces derniers au dispositif d'évaluation (3).

8. Dispositif suivant la revendication 6, caractérisé en ce que l'agencement de résistance (21, 22, 23) est constitué par trois résistances de quelques ohms agencées en un triangle équilatéral dont les sommets forment les points de contact (24, 25, 26).

9. Dispositif suivant l'une quelconque des revendications 6 à 8, destiné à la détermination de l'identité et de la position de pièces d'échecs sur un échiquier, caractérisé en ce que les 64 cases carrées (10) qui présentent les longueurs de côté D sont constituées respectivement par deux zones partielles (11, 12) de grandeurs égales ayant une couche isolante (13) agencée entre elles et en ce que les points de contact (24, 25, 26) agencés sur le côté inférieur des pièces d'échec satisfont à la relation:

$$H > \frac{D}{2}$$

dans laquelle H est la hauteur du triangle équilatéral.

10. Dispositif suivant l'une quelconque des revendications 6 à 8, destiné à la détermination de l'identité et de la position de pièces d'échecs sur un échiquier, caractérisé en ce que les 64 cases carrées (10) qui présentent les longueurs de côté D sont constituées respectivement par trois zones partielles de grandeurs égales (14, 15, 16) ayant des couches isolantes (17, 18) agencées entre elles et en ce que les points de contact (24, 25) agencés sur le côté inférieur des pièces d'échecs satisfont à la relation

$$H \geqslant \frac{D}{3}$$

dans laquelle H est la hauteur du triangle équilatéral.

11. Dispositif suivant l'une quelconque des revendications 6 à 10 précédentes, caractérisé en ce que le diamètre des points de contact (24, 25, 26) est à peine plus petit que l'épaisseur des couches isolantes (13, 17, 18).

12. Dispositif suivant l'une quelconque des revendications 6 à 11 précédentes, caractérisé en ce que l'émetteur de signal est constitué par une bascule à huit bits dont trois entrées d'adresses sont reliées à trois premières sorties d'adresses (A0 à A2) du dispositif d'évaluation et dont huit sorties sont reliées aux huit colonnes ((a) à (h)) de l'échiquier (1) et en ce que le récepteur de signal est constitué par un multiplexeur à huit bits (5) dont huit entrées sont reliées aux huit lignes ((1) à (8)) de l'échiquier (1) et dont trois entrées d'adresses sont reliées à trois secondes sorties d'adresses (A3 à A5) du dispositif d'évaluation.

13. Dispositif suivant la revendication 12, caractérisé en ce que la sortie du multiplexeur (5) est reliée, par un convertisseur analogique/numérique (8) qui transforme en un signal numérique la valeur de courant continu saisie d'une zone occupée par une pièce d'échecs, à un processeur (31) qui compare le signal numérique délivré par le convertisseur analogique/numérique (8) aux valeurs stockées pour la pièce d'échecs respective et qui délivre lors d'une concordance un signal $(X_1, X_2)$ indiquant l'identité et la position de la pièce d'échecs en question.

14. Dispositif suivant l'une quelconque des revendications 6 à 13 précédentes, caractérisé en ce que la sortie du multiplexeur (5) est reliée, par un convertisseur de tension en fréquence qui convertit la valeur de courant continu saisie d'une zone occupée par une pièce d'échecs en un signal d'une fréquence déterminée, à un processeur (31) qui compare le signal de fréquence délivré par le convertisseur de tension en fréquence aux valeurs de fréquence stockées pour la pièce d'échecs respective et qui délivre lors d'une corcordance un signal $(X_1, X_2)$ indiquant l'identité et la position de la pièce d'échecs en question.

15. Dispositif suivant l'une quelconque des revendications 6 à 14 précédentes, caractérisé en ce que les zones partielles (11, 12, 14, 15, 16) ainsi que les couches isolantes (13, 17, 18) agencées entre ces dernières sont formées par une feuille conductrice fixée sur une plaque électriquement isolante, la feuille conductrice correspondant à la configuration des zones partielles (11, 12, 14, 15, 16).

16. Dispositif suivant l'une quelconque des revendications 6 à 15 précédentes, destiné à un jeu d'échecs comportant une matrice d'échiquier comprenant des cases carrées alignées mutuellement en respectivement huit lignes et colonnes, caractérisé en ce que les zones partielles (11) reliées à l'émetteur de signal (4) sont reliées de façon continue entre elles et en ce que les zones partielles (12) d'une ligne respective reliées au récepteur de signal (5), sont reliées entre elles et au récepteur de signal (5) réalisé sous la forme d'un multiplexeur.

17. Procédé suivant la revendication 1, destiné à surveiller, afficher, commenter et documenter des parties d'échecs, caractérisé en ce que l'échiquier électronique (1) qui saisit la position et l'identité des pièces d'échecs délivre des signaux de position et d'identité à un interface vidéo (60) qui délivre, d'une part, des signaux vidéo à un écran de visualisation vidéo (90) et, d'autre part, des signaux de mémoire à un dispositif d'analyse et de mémorisation (50, 52, 53) et en ce que le dispositif d'analyse et de mémorisation (50, 52, 53) délivre tant les signaux vidéo que les signaux de mémoire à un dispositif de traitement de données (30).

18. Agencement suivant l'une quelconque des revendications 6 à 16, destiné à la mise en oeuvre du procédé suivant la revendication 17, caractérisé en ce qu'au moins un échiquier électronique (1) saisissant la position des pièces d'échecs est relié à un interface vidéo (60) dont la sortie est branchée tant à un écran de visualisation vidéo (90) qu'à un dispositif d'analyse et de mémorisation (50, 52, 53), en ce que le dispositif d'analyse et de mémorisation (50, 52, 53) est relié à l'entrée d'un dispositif de traitement de données (30) et en ce que l'interface vidéo (60) est relié à un clavier d'introduction (80) en vue de l'introduction de caractéristiques d'identification ou d'informations de jeu qui sont affichées sur l'écran de visualisation vidéo (90) et/ou délivrées au dispositif de traitement de données (30), et en ce que l'interface vidéo (60) est relié à une horloge de jeu d'échecs (45) qui peut être commandée par les joueurs d'échecs.

19. Agencement suivant la revendication 18, caractérisé en ce que plusieurs interfaces vidéo (61 à 66) reliés à chaque fois à un échiquier électronique (1a à 1n) sont raccordés à des entrées séparées du dispositif d'analyse et de mémorisation (50).

20. Agencement suivant l'une ou l'autre des revendications 18 et 19, caractérisé en ce que le dispositif de traitement de données (30) est relié du côté de sa sortie à un écran de visualisation vidéo (38) et/ou à une imprimante (33), de préférence à une imprimante à rayon laser, et/ou à un écran de projection à grande image (100).

21. Agencement suivant l'une quelconque des revendications 18 à 20 précédentes, caractérisé en ce que le dispositif d'analyse et de mémorisation (50) est constitué par un dispositif de contrôle de réseau (53) aux entrées duquel les sorties de plusieurs interfaces vidéo (63 à 66) sont raccordées, les données de ces derniers étant stockées dans le dispositif de contrôle de réseau (53) et délivrées cycliquement ou suivant une commande programmée au dispositif de traitement de données (30).

22. Agencement suivant l'une quelconque des revendications 18 à 21 précédentes, caractérisé en ce que le dispositif de traitement de données (30) est raccordé par un modem (34) à un réseau de transmission (101).

23. Agencement suivant la revendication 18, caractérisé en ce que l'interface vidéo (60) comporte un dispositif de contrôle vidéo (601) qui est relié à un élément constitutif d'entrée et de sortie (603) et à une RAM vidéo (602), et en ce que lors d'un actionnement correspondant du clavier d'introduction (80), des cases individuelles d'échiquier ou des groupes de ces cases sont mises en évidence par des différences de couleurs ou de clarté.

24. Agencement suivant la revendication 23, caractérisé en ce que l'interface vidéo (60) présente une unité de traitement (606) qui est reliée par une voie d'adresses et de données à une mémoire à simple lecture (605) et à une mémoire à accès sélectif (604) ainsi qu'à l'élément constitutif d'entrée et de sortie (603) et en ce que la sortie du dispositif de contrôle vidéo (601) est reliée à l'écran de visualisation vidéo (90) et l'élément constitutif d'entrée et de sortie (603) à une entrée du dispositif de contrôle de réseau (53).

# EP 0 289 519 B1

**Claims**

1. A method for determining the identity and position of objets which are provided with an identification device and are located in different fields of an area which is subdivided into a predetermined number of fields of the same size, with the fields being scanned and the signals from the identification devices of the objects being detected by an evaluation device which stores signals allocated to the individual objects, compares them with the altered signals and transmits signals corresponding to the identity and position of the objects, in particular for determining the identity and position of chess pieces on a chessboard, characterised in that the fields (10) are subdivided into at least two partial fields (11, 12), and a first and second part of the partial fields (11, 12) of a field (10) are bridged by one identification device each having an impedance (21, 22, 23), and that a measurement of the impedance (21, 22, 23) between the first and second part of the partial fields (11, 12) is carried out by applying an electric input signal to the first part of the partial fields (11, 12) and by the evaluation device (3) detecting the electrical output signal on the second part of the partial fields (11, 12).

2. A method according to Claim 1, characterised in that the individual fields (10) are triggered and scanned sequentially.

3. A method according to Claim 2, characterised in that the fields (10) are scanned in a multiplex process.

4. A method according to Claim 1, characterised in that the electrical signal consists of a d.c. voltage $(U_B)$ and the impedance of the identification device consists of a resistor arrangement (21, 22, 23), that the d.c. voltage $(U_B)$ is applied to the first part of a partial field (11, 12) sequentially under the control of a clock unit (6) and the individual fields (10) are scanned by the evaluation device (3) isochronically with the respective triggered field (10) in a multiplex process, and the current which flows when a field (10) is occupied by an object (2) is measured by the relevant resistor arrangement (21, 22, 23).

5. A method according to Claim 4, characterised in that the measured analog signals $(U_A)$ are converted into digital signals (D) and are transmitted to a processor (31) which compares the digital measured signals (D) with stored digital signals (Y) allocated to the individual objects (2) and, if they are identical, transmits a signal $(X_1, X_2)$ corresponding to the position and the identity of the relevant object.

6. An apparatus for determining the identity and position of objects which are provided with an identification device and are located in different fields of an area which is subdivided into a predetermined number of fields of the same size, with the fields being able to be scanned and the signals from the identification devices of the objects being detected by an evaluation device which stores signals allocated to the individual objects, compares them with the detected signals and transmits signals corresponding to the identity and position of the objects, in particular for determining the identity and position of chess pieces on a chessboard, characterised in that each of the fields (10) of the area (1) is subdivided into at least two partial fields (11, 12), that the surface of the objects (2) touching the fields (10) of the area (1) at least partially covers two partial fields (11, 12) in every position of the objects (2) on a field (10), that each of the objects (2) has a predetermined resistor arrangement (21, 22, 23) which is connected to at least two points of contact (24, 25, 26) which each contact a partial field (11, 12) on the surface touching the relevant field (10), and that one partial field (11) is connected to a signal transmitter (4) transmitting a predetermined electric signal and the other partial field (12) is connected to a signal receiver (5) which, when a field (10) is occupied by an object (2), as a result of the resistor arrangement (21, 22, 23) of the relevant object (2) detects an altered signal $(U_A)$ and transmits it to the evaluation device (3), which indicates that the relevant field (10) of the area (1) is occupied, and by a comparison of the altered signal $(U_A)$ with stored values (Y) of altered signals for the individual objects (2) transmits a signal $(X_1, X_2)$ indicating the identity and position of the relevant object (2).

7. An apparatus according to Claim 6, characterised in that the evaluation device is connected to the signal transmitter (4) and transmits coded signals (A0, A1, A2) to the signal transmitter (4) for sequential triggering of the partial fields (11), which transmitter applies a d.c. voltage signal sequentially to the one group of partial fields (11), and that the signal receiver (5) consists of a multiplexer which scans the signals on the individual partial fields (12) in succession and transmits them to the evaluation device (3).

8. An apparatus according to Claim 6, characterised in that the resistor arrangement (21, 22, 23) consists of three ohmic resistors arranged in an equilateral triangle, the corners of which resistors form the points of contact (24, 25, 26).

9. An apparatus according to Claims 6 and 8 for determining the identity and position of chess pieces on a chessboard, characterised in that the 64 square fields (10) having side lengths D each consist of two partial fields (11, 12) of equal size with an insulating layer (13) arranged therebetween, and that the points of contact (24, 25, 26) located on the underside of the chess pieces comply with the equation

$$H > \frac{D}{2}$$

in which H is the height of the equilateral triangle.

10. An apparatus according to Claims 6 and 8 for determining the identity and position of chess pieces

15

on a chessboard, characterised in that the 64 square fields (10) having the side lengths D each consist of three partial fields (14, 15, 16) of equal size with insulating layers (17, 18) arranged therebetween, and that the points of contact (24, 25) located on the underside of the chess pieces comply with the equation

$$H \geq \frac{D}{3}$$

in which H is the height of the equilateral triangle.

11. An apparatus according to one of the preceding Claims 6 to 10, characterised in that the diameter of the points of contact (24, 25, 26) is slightly smaller than the thickness of the insulating layers (13, 17, 18).

12. An apparatus according to one of the preceding Claims 6 to 11, characterised in that the signal transmitter consists of an 8-bit latch (4), the three address inputs of which are connected to three first address outputs (A0 to A2) of the evaluation device and the eight outputs of which are connected to the 8 columns ((a to h)) of the chessboard (1), and that the signal receiver consists of an 8-bit multiplexer (5), the eight inputs of which are connected to the eight rows ((1 to 8)) of the chessboard (1) and the three address inputs of which are connected to three second address outputs (A3 to A5) of the evaluation device.

13. An apparatus according to Claim 12, characterised in that the output of the multiplexer (5) is connected, via an analog/digital converter (8) which converts the d.c. value which is detected by a field occupied by a chess piece into a digital signal, to a processor (31) which compares the digital signal transmitted by the analog/digital converter (8) with the values stored for the respective chess piece and, if they are identical, transmits a signal $(X_1, X_2)$ designating the identity and position of the relevant chess piece.

14. An apparatus according to one of the preceding Claims 6 to 13, characterised in that the output of the multiplexer (5) is connected, via a voltage-to-frequency converter which converts the d.c. value detected by a field occupied by a chess piece into a signal of a particular frequency, to a processor (31) which compares the frequency signal transmitted by the voltage-to-frequency converter with the frequency values stores for the respective chess piece and, if they are identical, transmits a signal $(X_1, X_2)$ designating the identity and position of the relevant chess piece.

15. An apparatus according to one of the preceding Claims 6 to 14, characterised in that the partial fields (11, 12, 14, 15, 16) and also the insulating layers (13, 17, 18) arranged therebetween are formed by a conductive film attached to an electrically insulating plate, with the conductive film corresponding to the configuration of the partial fields (11, 12, 14, 15, 16).

16. An apparatus according to one of the preceding Claims 6 to 15 for a game of chess with a chessboard matrix with square fields arranged in rows next to each other in eight rows and columns each, characterised in that the partial fields (11) which are connected to the signal transmitter (4) are constantly interconnected and that the partial fields (12) of each row which are connected to the signal receiver (5) are connected to each other and to the signal receiver (5), which is designed as a multiplexer.

17. A method according to Claim 1 for monitoring, indicating, commentating on and documenting chess games, characterised in that the electronic chessboard (1) detecting the position and identity of the chess pieces transmits position and identity signals to a video interface (60), which on one hand transmits video signals to a video display unit (90) and on the other hand transmits storage signals to a scanning and storage unit (50, 52, 53), and that the scanning and storage unit (50, 52, 53) transmits both the video signals and also the storage signals to a data processing unit (30).

18. An arrangement according to Claims 6 to 16 for carrying out the method according to Claim 17, characterised in that at least one electronic chessboard (1) detecting the position of the chess pieces is connected to a video interface (60), the output of which is connected both to a video display unit (90) and to a scanning and storage unit (50, 52, 53), that the scanning and storage unit (50, 52, 53) is connected to the input of a data processing unit (30) and that the video interface (60) is connected to an input keyboard (80) for entering identifications or game information which are displayed on the video display unit (90) and/or are transmitted to the data processing unit (30), and that the video interface (60) is connected to a chess clock (45) which can be operated by the chess players.

19. An arrangement according to Claim 18, characterised in that a plurality of video interfaces (61 to 66) each connected to one electronic chessboard (1a to 1n) are connected to separate inputs of the scanning and storage unit (50).

20. An arrangement according to Claim 18 or 19, characterised in that the data processing unit (30) is connected on the output side with a video display unit (38) and/or a printer (33), preferably a laser jet printer and/or to a large screen (100).

21. An arrangement according to one of the preceding Claims 18 to 20, characterised in that the scanning and storage device (50) consists of a network controller (53), to the inputs of which the outputs of a plurality of video interfaces (63 to 66) are connected, the data of which are stored in the network controller (53) and are transmitted to the data processing unit (30) cyclically or by program-control.

22. An arrangement according to one of the preceding Claims 18 to 21, characterised in that the data processing unit (30) is connected to a remote transmission network (101) via a modem (34).

23. An arrangement according to Claim 18, characterised in that the video interface (60) contains a

16

video controller (601) which is connected to an input/output module (603) and a video RAM (602), and that when the input keys (80) are operated appropriately individual chessboard fields or groups thereof are highlighted by differences in colour or brightness.

24. An arrangement according to Claim 23, characterised in that the video interface (60) has a processor (606) which is connected via an address and data bus to a read-only memory (605) and a memory with random access (604) and to the input/output module (603), and that the output of the video controller (601) is connected to the video display unit (90) and the input/output module (603) is connected to an input of the network controller (53).

# FIG. 1

EP 0 289 519 B1

# FIG. 2

# FIG. 3

## FIG. 4

14

10

17

15

18

16

## FIG. 5

S₁ — 10a | 10b — S₂

S₄ — 10c | 10d — S₃

FIG. 6

FIG. 7

FIG. 8

$X_1 ; X_2$

$Y$

32

31

$A_0 \, A_1$

$A_2$

$A_3$

$A_4$

$A_5$

$+U_B$

4

5

$U_A$

7

$U_A$

D

A

D

8

19

1

## FIG. 9

## F I G. 10

## F I G. 11

F I G. 12

EP 0 289 519 B1